(19)

(11) **EP 3 869 144 B1**

(12) **EUROPÄISCHE PATENTSCHRIFT**

(45) Veröffentlichungstag und Bekanntmachung des Hinweises auf die Patenterteilung:
**01.10.2025 Patentblatt 2025/40**

(21) Anmeldenummer: **21157506.3**

(22) Anmeldetag: **17.02.2021**

(51) Internationale Patentklassifikation (IPC):
***F41G 7/22*** *(2006.01)* ***H01Q 1/28*** *(2006.01)*
***H01Q 21/20*** *(2006.01)*

(52) Gemeinsame Patentklassifikation (CPC):
**F41G 7/2246; F41G 7/2286;** H01Q 1/281

(54) **FLUGKÖRPER, INSBESONDERE LENKFLUGKÖRPER, MIT EINER RADARSENSOREINHEIT**

MISSILE, IN PARTICULAR GUIDED MISSILE, WITH A RADAR SENSOR UNIT

MISSILE, EN PARTICULIER MISSILE GUIDÉ, DOTÉ D'UNITÉ DE CAPTEUR RADAR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.02.2020 DE 102020001153**

(43) Veröffentlichungstag der Anmeldung:
**25.08.2021 Patentblatt 2021/34**

(73) Patentinhaber: **Diehl Defence GmbH & Co. KG**
**88662 Überlingen (DE)**

(72) Erfinder:
- **Hackel, Martin**
  **88662 Überlingen (DE)**
- **Koch, Volker**
  **90607 Rückersdorf (DE)**
- **Vaupel, Thomas**
  **53343 Wachtberg (DE)**
- **Die weiteren Erfinder haben auf ihr Recht verzichtet, als solche bekannt gemacht zu werden.**

(74) Vertreter: **Diehl Patentabteilung**
**c/o Diehl Stiftung & Co. KG**
**Stephanstraße 49**
**90478 Nürnberg (DE)**

(56) Entgegenhaltungen:
**EP-A1- 3 221 921** **EP-A2- 2 673 656**
**EP-B1- 2 673 656** **EP-B1- 3 221 921**
**US-A1- 2008 258 065**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Processed by Luminess, 75001 PARIS (FR)

## Beschreibung

Die zu Grunde liegende Erfindung betrifft einen Flugkörper, insbesondere einen Lenkflugkörper, mit einer zur Zielerfassung ausgebildeten Radarsensoreinheit.

Im Stand der Technik sind beispielsweise Waffenleitsysteme bekannt, die zum Leiten einer Waffe zu einem Ziel Radarsensoren verwenden. Ein solches Waffenleitsystem ist beispielsweise aus der DE 695 15 790 T2 bekannt, wonach eine Abschussplattform mit einer Radareinrichtung mit synthetischer Apertur ausgestattet ist. Mittels der Radareinrichtung der Abschussplattform kann das ein Ziel umgebende Gebiet kartiert werden und aus der Kartierung kann der Ort des Ziels bestimmt werden. Basierend auf dem von der Radareinrichtung der Abschussplattform bestimmten Ort des Ziels wird die Waffe zum Ziel geflogen.

Aus der DE 31 45 374 A1 ist ein Verfahren bekannt, mit dem Bodenziele mittels eines Flugkörpers bekämpft werden können. Der Flugkörper weist einen Mittel- und Endphasensuchkopf auf, wobei mit einem Radarsuchkopf in der Mittelphase eine Koordination von Mehrfachzielen erfolgt und durch Zielauswahl ein Anflugkurs für die Endphase bestimmt wird. Der Radarsuchkopf arbeitet nach dem Prinzip der synthetischen Apertur, wobei in der Mittelphase quer zur Flugrichtung Flächen abgetastet werden und basierend auf der Dopplerhistorie einzelne Punkte der abgetasteten Fläche aufgelöst werden.

Aus der WO 02/088770 A2 ist ein Verfahren zur Erkennung und Identifizierung von Objekten bei Flugkörpern bekannt. Bei dem Verfahren wird die Umgebung des Flugkörpers mittels eines nach dem Prinzip der synthetischen Apertur arbeitenden Radargeräts abgetastet, wobei das Radargerät eine Vielzahl von Antennenelementen umfasst, die entlang der gekrümmten Flugkörperkontur der Flugkörperspitze angebracht sind.

Die EP 3 221 921 A1 beschreibt eine Groundplane-Antenne für einen Flugkörper, deren Groundplane so ausgebildet ist, dass diese als optischer Reflektor dienen kann. Es wird vorgeschlagen, dass am Rand der kreisförmigen Groundplane zwei, einander gegenüberliegende Monopolstrahlerelemente angeordnet sind, welche senkrecht zur Groundplane ausgerichtet sind. Die Monopolstrahlerelemente können konform mit einer Oberfläche eines Radoms des Flugkörpers ausgebildet sein, die Groundplane hingegen ist im Inneren des Flugkörpers angeordnet.

Zur Aufrechterhaltung der Datenverbindung zwischen einem Flugkörper und Kontrollstationen, bei welchen unterschiedliche Frequenzbänder zum Einsatz kommen, wird gemäß der EP 2 673 656 A2 vorgeschlagen, den Flugkörper mit einem oder mehreren adaptiven elektronisch steuerbaren Arrays (AESAs) zu versehen. Jedes Array kann eine Vielzahl von Strahlungselementen und Steuerschaltungen zur Konfiguration der Elemente für Multiband- und Multiaperturbetrieb umfassen. Eine Steuerschaltung kann so konfiguriert sein, dass sie einen Sichtlinienvektor (LOS) verwendet, um ein Array für die Kommunikation mit einer Kommunikationsstation zu steuern, während der Flugkörper manövriert. Die Arrays können am Umfang des Flugkörpers angeordnet sein.

Die US 2008/258065 A1 beschäftigt sich mit einem Sensor zum Erfassen einer Ausbreitungsrichtung elektromagnetischer Energie. Der Sensor umfasst eine Vielzahl von Empfängern, die in verschiedene Richtungen ausgerichtet sind, um mindestens einen Teil der elektromagnetischen Energie zu absorbieren, wobei jeder der Vielzahl von Empfängern eine Vielzahl von Kohlenstoff-Nanoröhren oder Nanofasern umfasst. Die Empfänger können auf der Außenfläche eines Flugkörpers angeordnet sein, beispielsweise im Bereich der Flugkörpernase, des Rumpfes oder der Steuerflächen. Der Sensor umfasst ferner einen mit den Empfängern verbundenen Prozessor, mit welchem die Ausbreitungsrichtung der auf die Empfänger auftreffenden elektromagnetischen Energie bestimmbar ist.

Obgleich die bekannten Verfahren eine Zielsteuerung bei einem Flugkörper ermöglichen, ist es dennoch wünschenswert, die Genauigkeit der Zielnavigation und Zielführung und die Genauigkeit der Zielerkennung zu verbessern, bei gleichzeitig einfacher Implementierungsmöglichkeit für eine Radarsensoreinheit.

Ausgehend davon ist es eine Aufgabe der Erfindung, einen Flugkörper, insbesondere einen Lenkflugkörper, bereitzustellen, der eine verbesserte Zielführung und/oder Zielerkennung ermöglicht, insbesondere bei gleichzeitig vergleichsweise einfacher Implementierung von Radarsensoreinheiten zur Zielerfassung. Ferner kann es als eine Aufgabe der Erfindung angesehen werden, einen Flugkörper bereitzustellen, der Vorteile hinsichtlich der Funktionalisierung des Flugkörperkorpus ermöglicht.

Diese Aufgabe wird gelöst durch die Merkmale von Patentanspruch 1. Ausgestaltungen der Erfindung ergeben sich aus den abhängigen Ansprüchen sowie aus der nachfolgenden Beschreibung von Ausgestaltungen und beispielhaften Ausführungsformen.

Gemäß Ausgestaltungen ist ein Flugkörper, insbesondere ein Lenkflugkörper, vorgesehen.

Der Flugkörper umfasst einen Flugkörperkorpus und eine Radarsensoreinheit zur Erfassung eines Zielobjekts, d.h. eine Radarsensoreinheit, die zur Erfassung eines Zielobjekts eingerichtet ist.

Der Begriff Flugkörperkorpus soll dabei insbesondere ein oder mehrere Hauptkomponenten des Flugkörpers unabhängig von einer möglichen speziellen Funktionalisierung beschreiben. Entsprechende Hauptkomponenten umfassen beispielsweise und nicht abschließend Außenhaut und Außenwandung/en oder Teile davon, sowie Flugkörpersegmente betreffend eine Antriebseinheit des Flugkörpers, eine Flugkörperspitze oder -nase, und eine Lenkeinheit des Flugkörpers.

Die Radarsensoreinheit umfasst mehrere in Längsrichtung streifenförmige Radarantennen, d.h. die Radarsensoreinheit umfasst mehrere Radarantennen, die in ihrer Längsrichtung streifenförmig ausgebildet sind. Der Begriff "streifenförmig" soll dabei insbesondere in seiner allgemeinen Bedeutung im Sinne von lang, schmal und bandartig verstanden werden. Eine entsprechende streifenförmige Radarantenne weist insoweit eine Länge auf, die deutlich größer, insbesondere wesentlich größer, ist als deren Breite.

Eine solche streifenförmige Radarantenne ist insbesondere derart ausgebildet und eingerichtet, dass diese in Kombination mit einer entsprechenden Steuer- und Auswerteelektronik dazu verwendet werden kann, ein Zielobjekt zu erfassen, zu detektieren, und gegebenenfalls im Sichtfeld der Radarsensoreinheit zu verfolgen. Ferner ist die Radarsensoreinheit dazu eingerichtet, die Ausrichtung des Sichtfelds zum Zwecke der Zielerfassung anzupassen.

Bei dem Zielobjekt kann es sich beispielsweise um ein Zielobjekt handeln, zu dem der Flugkörper gelenkt oder navigiert werden soll, wobei das Zielobjekt z.B. ein stationäres oder bewegliches boden-, luft- oder wassergebundenes Objekt sein kann.

Die streifenförmigen Radarantennen (im Weiteren auch kurz Radarantenne bezeichnet) sind an einer Umfangsfläche des Flugkörperkorpus montiert oder integriert. Dabei können die Radarantennen auf oder an einer Außenhaut oder Außenhülle des Flugkörpers oder des Flugkörperkorpus montiert sein. Möglich ist auch, dass die Radarantennen, zumindest abschnittsweise oder teilweise in die Außenhaut oder Außenhülle des Flugkörpers integriert sind, beispielsweise in einem Außenhautabschnitt oder in einer Außenwandung des Flugkörpers. Der Außenhautabschnitt kann z.B. ein einstückiges Segment der Außenhaut des Flugkörpers bilden. In Ausgestaltungen können die Radarantennen als substratintegrierte Radarantennen ausgebildet sein, wobei beispielsweise ein Außenhautabschnitt des Flugkörpers als Substrat für die Integration dienen kann.

Die streifenförmigen Radarantennen sind dabei derart montiert oder integriert, dass die Längsrichtung der streifenförmigen Radarantennen in Richtung der Flugkörperlängsachse ausgerichtet ist, insbesondere in Richtung der Flugkörperlängsachse verläuft. Alle Radarantennen können entsprechend ausgerichtet sein, d.h. ihre Längsrichtung ist jeweils in Richtung der Flugkörperlängsachse, d.h. korrespondierend zur Flugkörperlängsachse ausgerichtet.

Dabei soll unter der Formulierung "in Richtung der Flugkörperlängsachse ausgerichtet" verstanden werden, dass der durch die Längsrichtung einer streifenförmigen Radarantenne definierte Richtungsvektor eine Zerlegung mit einer zur Flugkörperlängsachse parallelen Komponente aufweist.

In Ausgestaltungen können die streifenförmigen Radarantennen derart montiert oder integriert sein, dass die Längsrichtung einer streifenförmigen Radarantenne und die Flugkörperlängsachse eine Ebene aufspannen. In einem Spezialfall kann die Längsrichtung einer streifenförmigen Radarantenne im Wesentlichen parallel, insbesondere im Wesentlichen echt parallel, zur Flugkörperlängsachse sein. Bei einer anderen Anordnung der streifenförmigen Radarantennen kann vorgesehen sein, dass ein Zwischenwinkel zwischen der durch die Längsrichtung einer streifenförmigen Radarantenne definierten Längsachse und der Flugkörperlängsachse ein spitzer Winkel ist.

Im Falle einer im Wesentlichen echt parallelen Anordnung einer Radarantenne zur Flugkörperlängsachse kann die Radarantenne beispielsweise an oder in einem zur Flugkörperlängsachse zylindrischen Segment des Flugkörperkorpus montiert oder integriert sein. Bei einer wie oben beschriebenen Anordnung mit einem spitzen Zwischenwinkel kann eine Radarantenne beispielsweise an oder in einem zur Flugkörperlängsachse konisch oder konusartig verlaufenden Segment des Flugkörperkorpus montiert oder integriert sein.

Die hierin verwendeten Formulierungen betreffend Eigenschaften r zumindest einer Radarantenne sollen insbesondere so verstanden werden, dass jeweilige Eigenschaften bei oder für alle vorhandenen Radarantennen der Radarsensoreinheit gelten oder vorliegen können, sofern sich nichts anderes ergibt.

Gemäß Ausgestaltungen kann eine Radarantenne in Längsrichtung der Radarantenne im Wesentlichen parallel zur Flugkörperlängsachse ausgebildet und angeordnet sein. Eine solche Ausgestaltung ist beispielsweise dann möglich, wenn das Segment oder die Fläche des Flugkörperkorpus, an oder in dem/der die Radarantenne montiert oder integriert ist, parallel zur Flugkörperlängsachse verläuft und entsprechend eine parallele Montage oder Integration der Radarantenne möglich ist. Die Formulierung "im Wesentlichen parallel" soll dabei insbesondere bedeuten, dass die Ausrichtung abgesehen von üblichen Herstellungstoleranzen parallel ist.

Jedoch ist es in Ausgestaltungen auch möglich, eine Radarantenne beispielsweise an oder in einem bezüglich der Flugkörperlängsachse konisch verlaufenden Segment des Flugkörperkorpus zu montieren oder integrieren.

Gemäß Ausgestaltungen ist eine Radarantenne in Längsrichtung der Radarantenne planar, d.h. bezüglich der Längsrichtung im Wesentlichen ungekrümmt, ausgebildet. Beispielsweise kann die Radarantenne an oder in einer in Längsrichtung der Radarantenne planaren Fläche, insbesondere Oberfläche, des Flugkörperkorpus ausgebildet sein. Mit anderen Worten kann eine Radarantenne an oder in einer Fläche, insbesondere an oder in einer Oberfläche, montiert oder integriert sein, die in Längsrichtung der Radarantenne zumindest über die Längserstreckung der Radarantenne hinweg im Wesentlichen planar ist, d.h. im Wesentlichen nicht gekrümmt ist. Eine entsprechende Oberfläche kann beispielsweise durch ein zylinderförmiges Segment des Flugkörperkorpus gebildet sein, und insbesondere in Richtung der Flugkörperlängsachse, beispielsweise parallel zur Flugkörperlängsachse, verlaufen.

Die mehreren Radarantennen sind als Sendeantenne und/oder Empfangsantenne ausgebildet oder eingerichtet. Das bedeutet, dass in einer Ausgestaltung eine oder mehrere der mehreren Radarantennen entweder lediglich für einen Betrieb als Sendeantenne oder lediglich für einen Betrieb als Empfangsantenne eingerichtet ist/sind. Möglich ist jedoch auch, dass eine oder mehrere der mehreren Radarantennen für einen wechselnden Betrieb als Sendeantenne und Empfangsantenne eingerichtet sind.

Mit der vorgeschlagenen Radarsensoreinheit ist es möglich, einen Flugkörper, beispielsweise einen Lenkflugkörper mit einer zur Zielerfassung nutzbaren Radarsensorik auszustatten, wobei zugehörige Radarsensoren in einem ansonsten nicht funktionalisierten Bereich des Umfangs des Flugkörperkorpus angeordnet werden können. Insoweit kann die Flugkörperspitze im Wesentlichen frei funktionalisiert werden. Beispielsweise ist es möglich auf die bei bekannten Lenkflugkörpern in der Flugkörperspitze integrierte Zielerfassungssensorik zu verzichten, und die Flugkörperspitze anderweitig zu funktionalisieren, z.B. mit einem Gefechtskopf. Jedoch ist es auch möglich, zusätzlich zu der vorgeschlagenen Radarsensoreinheit an der Flugkörperspitze eine weitere Zielerfassungssensorik vorzusehen, und entsprechende Sensordaten ergänzend zur Zielerfassung und Zielverfolgung sowie zur Zielnavigation zu verwenden, wodurch die Genauigkeit und Zuverlässigkeit der Zielerfassung, Zielverfolgung und Zielnavigation verbessert werden können.

Ferner bietet die vorgeschlagene Radarsensoreinheit die Möglichkeit der Nachrüstung einer Radarsensorik bei Flugkörpern, ohne auf übliche Funktionalisierungen, beispielsweise ein Infrarot-Suchkopf oder eine Gefechtseinheit, in der Flugkörperspitze verzichten zu müssen.

Ferner kann eine, in Längsrichtung streifenförmige Radarantenne der Radarsensoreinheit im Hinblick auf die Aerodynamik des Flugkörpers in besonders vorteilhafter Weise in oder an der Umfangsfläche montiert oder integriert werden, wodurch Vorteile hinsichtlich Aerodynamik gegenüber anderweitigen Montageorten am Flugkörperkorpus erreicht werden können.

Die Radarantennen sind eingerichtet zum Betrieb als Sendeantenne zum Senden von Radarsignalen und/oder zum Betrieb als Empfangsantenne zum Empfang von reflektierten Radarsignalen. Entsprechend kann eine Radarantenne als reine Sendeantenne eingerichtet sein, als reine Empfangsantenne eingerichtet sein, oder als Sende-Empfangsantenne eingerichtet sein, d.h. als eine Antenne, die eingerichtet ist zur wahlweisen Verwendung als Sendeantenne und Empfangsantenne.

Die Radarsensoreinheit weist mehrere, zumindest jedoch zwei streifenförmige Radarantennen auf, die an der Umfangsfläche des Flugkörperkorpus montiert oder integriert sind. Die zwei oder mehreren Radarantennen können im Wesentlichen identisch aufgebaut sein. Insbesondere können die Radarantennen in Längsrichtung der Radarantennen betrachtet im Wesentlichen die gleiche Länge aufweisen.

Zwei oder mehrere der Radarantennen können in Ausgestaltungen im Wesentlichen parallel zueinander ausgerichtet angeordnet sein. Dabei können die Längsachsen der jeweiligen Radarantennen parallel zueinander verlaufen, wobei die Längsachsen als solche wiederum parallel zur Flugkörperlängsachse verlaufen können, jedoch nicht müssen, beispielsweise wenn die Umfangsfläche konisch verläuft.

In Ausgestaltungen können zwei oder mehrere Radarantennen, vorzugsweise alle Radarantennen, in Längsrichtung der Radarantennen betrachtet, im Wesentlichen die gleiche Länge aufweisen. Die Radarantennen können parallel zur Flugkörperachse, beispielsweise ohne Versatz montiert oder integriert sein. Alternativ können die Radarantennen versetzt zueinander angeordnet sein, beispielsweise um ein Überkoppeln eines Sendesignals einer als Sendeantenne betriebenen Radarantenne auf eine als Empfangsantenne betriebene Radarantenne zu reduzieren. Entsprechende Radarantennen mit gleicher Ausrichtung und in Längsrichtung versetzter oder nicht versetzter Anordnung können zu Radarantennengruppen zusammengefasst sein.

Solche Radarantennengruppen, jedoch auch einzelne Radarantennen, können beispielsweise jeweils auf einem Trägerelement montiert oder integriert sein. Bei einem solchen Trägerelement kann es sich beispielsweise um ein Bauteil handeln, das nach Montage einen Bestandteil der Flugkörperaußenhaut bildet. Werden entsprechende Trägerelemente verwendet, können jeweilige Radarantennen substratintegriert ausgebildet sein, insbesondere derart, dass die Radarantennen nach Montage des Trägerelements am Flugkörperkorpus an einer Außenseite des Flugkörperkorpus gelegen sind. An der von der Außenseite abgewandten Innenseite des Trägerelements können Anschlussschnittstellen vorgesehen sein, zum signal- und steuerungstechnischen Verbinden der Radarantennen mit einer oder mehreren zugeordneten Elektronikeinheiten zur Steuerung der Radarantennen und/oder zur Auswertung von Empfangssignalen.

Die Radarantennen können insbesondere so montiert oder integriert sein, dass sie sich in Richtung der Flugkörperlängsachse betrachtet über das gleiche Segment des Flugkörperkorpus hinweg erstrecken. Beispielsweise können die Radarantennen am Umfang einer zylinderförmigen Außenwandung montiert oder integriert sein.

Die entsprechenden zwei oder mehreren Radarantennen, insbesondere die Radarantennen einer Radarantennengruppe, können, wie weiter oben bereits angedeutet, zum Betrieb als Sende- und/oder Empfangsantennen eingerichtet sein.

Gemäß der Erfindung umfasst die Radarsensoreinheit zumindest eine Radarantennengruppe mit mehreren Radarantennen. Zumindest eine der zumindest einen Radarantennengruppe umfasst eine zum Betrieb als Sendeantenne eingerichtete erste Radarantenne, und zwei der ersten Radarantenne zugeordnete zweite Radarantennen , die eingerichtet sind zum Betrieb als Empfangsantennen für den Empfang von reflektierten Radarsignalen. Die reflektierten Radarsignale können dabei basieren auf Radarsignalen der ersten Radarantenne der Radarantennengruppe oder einer anderen als Sendeantenne eingerichteten Radarantenne einer anderen Radarantennengruppe. Entsprechende Radarantennengruppen können über den Umfang des Flugkörperkorpus verteilt, insbesondere gleichverteilt, angeordnet sein.

Eine funktionelle Anordnung und Zusammenfassung von Radarantennengruppen kann insbesondere hinsichtlich einer Montage oder Integration in oder am Flugkörperkorpus beispielsweise von Vorteil sein, wenn solche Radarantennengruppen auf einem gemeinsamen Trägerelement, z.B. einer Trägerplatte als Teil der Außenhülle des Flugkörperkorpus, montiert oder integriert sind.

Gemäß Ausgestaltungen können die Radarantennen in Umfangsrichtung bezüglich der Flugkörperlängsachse verteilt angeordnet sein. Beispielsweise ist es möglich, mehrere Radarantennengruppen über den Umfang des Flugkörperkorpus verteilt anzuordnen, z.B. gemäß einer Gleichverteilung in Umfangsrichtung und/oder gemäß einer vorgegebenen Symmetrie. Bei einer geeigneten Verteilung oder Symmetrie der Anordnung in Umfangsrichtung kann beispielsweise eine Radarsensoreinheit umgesetzt werden, die in der Gesamtheit betrachtet in Umfangsrichtung zur Flugkörperlängsachse, auch als Azimutrichtung bezeichnet, ein Sichtfeld mit vergleichsweise großem Öffnungswinkel aufweist.

Entsprechend der Erfindung ist die Radarsensoreinheit zur Emission von Radarsignalen oder Radarstrahlung zumindest einer vorgegebenen Radarwellenlänge eingerichtet und umfasst zumindest zwei unmittelbar benachbarte streifenförmige Radarantennen, die eingerichtet sind zumindest zum Betrieb als Empfangsantennen, wobei ein Abstand der unmittelbar benachbarten, zum Betrieb als Empfangsantennen eingerichteten streifenförmigen Radarantennen quer, insbesondere senkrecht, zu deren Längsrichtung höchstens so groß ist, wie eine oder ein Vielfaches der Radarwellenlänge. Beispielsweise kann der Abstand in der Größenordnung der Radarwellenlänge liegen. Insbesondere kann der Abstand im Bereich des ein- bis zweifachen der Radarwellenlänge liegen. Mit einer entsprechenden Anordnung der Empfangsantennen kann insbesondere ein vorteilhaftes Auflösungsvermögen in Umfangsrichtung, d.h. in Azimutrichtung, erreicht werden.

Gemäß Ausgestaltungen ist zumindest eine der Radarantennen derart eingerichtet und betreibbar, dass diese ein über dem Polarwinkel richtbares Antennendiagramm, d.h. eine über dem Polarwinkel richtbare Antennenhauptkeule aufweist. Beispielsweise kann eine entsprechende Radarantenne als eine streifenförmige Leckwellenantenne ausgebildet sein, deren Antennendiagramm über dem Polarwinkel z.B. durch Anpassung der Frequenz ausrichtbar ist.

Gemäß Ausgestaltungen kann die Radarantenne insbesondere derart eingerichtet sein, dass der Öffnungswinkel, d.h. die Halbwertsbreite der Antennenhauptkeule, insbesondere der sendeseitigen Antennenhauptkeule oder die Strahlbreite bei - 3 dB, über dem Polarwinkel im definierten Bereich 30 Grad oder kleiner als 30 Grad ist.

Gemäß Ausgestaltungen kann die Radarantenne insbesondere derart eingerichtet sein, dass der Öffnungswinkel, d.h. die Halbwertsbreite, über dem Azimutwinkel im definierten Bereich 30 Grad oder größer als 30 Grad ist.

Bei derart eingerichteten Radarsensoreinheiten ergibt sich ein vergleichsweise scharfer Erfassungsbereich über dem Polarwinkel, und ein vergleichsweise breiter Erfassungsbereich über dem Azimutwinkel, mit welchen eine vergleichsweise genaue Ermittlung von Polar- und Azimutwinkel für ein Zielobjekt ermittelt werden kann, worauf weiter unten noch genauer eingegangen wird.

Im Zusammenhang mit den vorangehenden Ausgestaltungen, die sich auf Polarwinkel (Theta) und Azimutwinkel (Phi) beziehen, werden diese Winkel bezüglich eines Kugelkoordinatensystems verstanden, dessen Polachse in Richtung der Längsachse der jeweils betrachteten streifenförmigen Radarantenne/n verläuft, vorzugsweise parallel zur Flugkörperlängsachse, wobei die positive Polachse der Flugkörperspitze zugewandt ist. Ist die Polachse parallel zur Flugkörperlängsachse, ist der Polachsenvektor der positiven Polachse parallel zur Flugkörperlängsachse und verläuft parallel zu der Richtung die bezüglich der Flugkörperlängsachse zur Flugkörperspitze hin zeigt.

Gemäß Ausgestaltungen kann die zumindest eine Radarantenne als eine über die Frequenz oder über die Phase über den Polarwinkel ausrichtbare Radarantenne ausgebildet sein. Eine entsprechende Radarantenne ist insbesondere derart eingerichtet, dass die Ausrichtung der Antennenhauptkeule, insbesondere der sendeseitigen Antennenhauptkeule, der Radarantenne bezüglich des Polarwinkels über die Betriebsfrequenz oder die Phase einstellbar ist.

Eine entsprechende, als Sendeantenne eingerichtete und betreibbare Radarantenne kann beispielsweise als eine Leckwellenantenne ausgebildet sein, die eine Einstellung des Polarwinkels der Antennenhauptkeule beispielsweise über die Frequenz ermöglicht.

Ferner ist es möglich, dass eine entsprechende Radarantenne als phasengesteuerte Gruppenantenne eingerichtet und ausgebildet ist, die eine Einstellung des Polarwinkels der Antennenhauptkeule über die Phase ermöglicht.

Leckwellenantennen und phasengesteuerte Gruppenantennen sind im Stand der Technik weithin bekannt und werden insoweit nicht im Detail beschrieben.

Radarantennen mit über dem Polarwinkel einstellbaren oder ausrichtbaren Antennenhaupthauptkeulen ermöglichen einerseits eine Ausrichtung des Sichtfelds der Radarsensoreinheit in Richtung eines Zielobjekts mit bekannter Position, und ermöglichen andererseits eine Abtastung der Umgebung in Polarwinkelrichtung zur Ermittlung des Polarwinkels eines zu erfassenden Zielobjekts oder eines bereits erfassten Zielobjekts.

Gemäß Ausgestaltungen umfasst der Flugkörper des Weiteren eine Elektronikeinheit, insbesondere eine Steuer- und Auswerteelektronik, für die Radarsensoreinheit, wobei die Elektronikeinheit, insbesondere die Steuer- und Auswerteelektronik, datentechnisch und insbesondere signaltechnisch mit der Radarsensoreinheit zu deren Betrieb, insbesondere zur Steuerung des Betriebs der Radarsensoreinheit verbindbar oder verbunden ist.

Die Elektronikeinheit umfasst eine oder mehrere Elektronikkomponenten, die derart eingerichtet sind, dass diese beim Betrieb der Elektronikeinheit die zumindest eine Radarantenne als Sendeantenne und/oder Empfangsantenne betreibt/betreiben.

Die Elektronikeinheit und/oder die zumindest eine Radarantenne kann/können insbesondere derart eingerichtet sein, dass bei dessen/deren Betrieb zumindest einer der unten beschriebenen Verfahrens- oder Betriebsschritte ausgeführt wird.

Die Elektronikkomponenten können beispielsweise eine oder mehrere Schaltungskomponenten, eine oder mehrere festprogrammierbare Rechner- oder Steuereinheiten mit darauf gespeicherten Instruktionen und/oder einen oder mehrere flüchtig programmierbare Rechner- oder Steuereinheiten mit einem oder mehreren diesen zugeordneten nichtflüchtigen Speichern mit darauf gespeicherten Instruktionen umfassen, wobei der Betrieb der Schaltungskomponenten und/oder eine Ausführung der Instruktionen durch die jeweilige Rechner- oder Steuereinheit/en eine Ausführung der jeweiligen Verfahrens- oder Betriebsschritte bewirkt.

Gemäß Ausgestaltungen kann ein Verfahrens- oder Betriebsschritt darin bestehen, dass ein Sendekanal einer Sendeelektronik, insbesondere einer Sendeelektronikbaugruppe der Steuerelektronik, mit zumindest einer als Sendeantenne betreibbaren Radarantenne verbunden wird. Ferner kann ein Empfangskanal einer Empfangselektronik, insbesondere einer Empfangselektronikbaugruppe, mit zumindest einer als Empfangsantenne betreibbaren Radarantenne verbunden werden. Dabei können die als Sendeantenne/n betreibbare/n Radarantenne/n und als die Empfangsantenne/n betreibbare/n Radarantennen/n vorzugsweise derart mit Sende- und Empfangskanälen verbunden und betrieben werden, dass die Radarsensoreinheit mit einer Antennenhauptkeule betreibbar ist, insbesondere sendeseitig eine Antennenhauptkeule aufweist, die in Richtung des Zielobjekts, d.h. in Richtung des zu detektierenden Zielobjekts, ausrichtbar oder gerichtet ist.

Zur Einstellung der Antennenhauptkeule können beispielsweise Zielobjektdaten, z.B. in Form von Daten zur Position, Geschwindigkeit und Beschleunigung des Zielobjekts verwendet werden. Sofern diese Zielobjektdaten dem Flugkörper, d.h. der Flugkörpersteuerung, noch nicht bekannt sind, beispielsweise weil eine Erfassung des Zielobjekts mit flugkörpereigenen Zielerfassungssensoren noch nicht möglich war, können entsprechende Zielobjektdaten von einer externen Einheit, beispielsweise einer externen, flugkörperfremden Sensoreinheit, oder anderweitig basierend auf Daten im Form von Vorwissen zum Zielobjekt erhalten werden. Die extern ermittelten Zielobjektdaten können beispielsweise über drahtlose Datenübertragung während des Flugs des Flugkörpers, oder vor Start des Flugkörpers per drahtgebundener oder drahtloser Datenübertragung zum Flugkörper übermittelt und vom Flugkörper empfangen werden. Daten zum Zielobjekt können auch dadurch gewonnen werden, falls beispielsweise keine Zielobjektdaten von externen Einheiten vorliegen, dass der Raum mit der Radarsensoreinheit mittels einer geeigneten Suchstrategie abgetastet wird. Im Rahmen der Suchstrategie kann beispielsweise die Ausrichtung der Antennenhauptkeule nach einem vorgegebenen Schema, insbesondere Algorithmus, verändert werden.

Gemäß einer Ausgestaltung kann ein Verfahrens- oder Betriebsschritt umfassen: Ansteuern zumindest einer der Radarantennen zur Ausrichtung der jeweiligen Antennenhauptkeule, insbesondere in Polarrichtung, auf ein detektiertes oder zu detektierendes Zielobjekt. Bei der Ausrichtung in Polarrichtung können bereits vorhandene Zielobjektdaten, insbesondere Vorwissen zum Zielobjekt, verwendet werden. Sofern dem Flugkörperradarsensor bereits Zielobjektdaten aus eigener Zielerfassung bekannt sind, können diese zur Ausrichtung der Antennenhauptkeule/n verwendet werden. Die Einstellung der Polarrichtung der Antennenhauptkeule/n kann, wie bereits beschrieben, bei einer frequenzschwenkbaren Radarantenne durch Variation der Frequenz erfolgen. Bei phasenschwenkbaren Radarantennen kann die Einstellung der Polarrichtung durch einen entsprechenden phasengesteuerten Betrieb der Radarantennen erreicht werden.

Gemäß Ausgestaltungen kann, wie bereits angedeutet, die Ausrichtung der Antennenhauptkeule/n für z.B. ein noch zu detektierendes Zielobjekt, beispielsweise ein noch nicht im Sichtfeld der Radarsensoreinheit detektierbares oder detektiertes Zielobjekt, basierend auf Zielobjektdaten variiert werden, die dem Flugkörper, insbesondere entsprechenden Steuereinheiten, von externen Datenquellen zur Verfügung gestellt werden, oder die durch die Radarsensoreinheit durch Abtastung des Raumes erzeugt werden oder wurden.

Durch Variation der Ausrichtung der Antennenhauptkeulen kann die Umgebung, insbesondere das mit der Radarsensoreinheit jeweils abtastbare Raumsegment, schrittweise auf ein Zielobjekt hin abgetastet werden. Zur Abtastung kann beispielsweise eine vorgegebene Suchstrategie zur Variation der Ausrichtung der Antennenhauptkeule/n der Radarantennen verwendet werden. Zur Abtastung des Raumsegments können insbesondere Zielobjektdaten verwendet werden die z.B. eine ungefähre Position eines Zielobjekts enthalten bzw. angeben.

Gemäß Ausgestaltungen kann der Flugkörper, beispielsweise durch entsprechende Einrichtung der Flugkörpersteuerung und der Radarsensoreinheit, derart eingerichtet sein, dass Raumsegmente in dem bezüglich der Flugkörperspitze gesamten vorderen Halbraum durch entsprechende Ansteuerung der Radarantennen und/oder Steuerung des Flugkörpers abgetastet werden können.

Gemäß Ausgestaltungen kann ein Verfahrens- oder Betriebsschritt ein Variieren der Ausrichtung der Antennenhauptkeule/n einer oder mehrerer Radarantennen in aufeinanderfolgenden Detektionszyklen umfassen. Ferner kann in diesem Zusammenhang ein Verfahrens- und Betriebsschritt ein Ermitteln von Positionsdaten zum Zielobjekt, insbesondere von Polarwinkeldaten des Zielobjekts, bezüglich eines flugkörpereigenen (Kugel-)Koordinatensystems, durch Amplitudenvergleich der in aufeinanderfolgenden Detektionszyklen detektierten reflektierten Radarsignale umfassen.

Gemäß Ausgestaltungen kann ein Verfahrens- oder Betriebsschritt die zeitgleiche Detektion eines reflektierten Radarsignals, d.h. eines Reflexionssignals, eines von einer als Sendeantenne betriebenen Radarantenne ausgesandten Radarsignals umfassen. Dabei wird das Reflexionssignal mittels benachbarter, insbesondere in Umfangsrichtung, d.h. quer zur Längsrichtung der Radarantennen, unmittelbar benachbarter, als Empfangsantennen betriebener Radarantennen zeitgleich detektiert. Basierend auf dem zeitgleich detektierten Reflexionssignal kann ein weiterer Verfahrens- und Betriebsschritt das Ermitteln von Positionsdaten zum Zielobjekt umfassen. Dabei handelt es sich bei den Positionsdaten vorzugsweise um Azimutwinkeldaten des Zielobjekts bezüglich eines flugkörpereigenen (Kugel-) Koordinatensystems. Die Positionsdaten zum Zielobjekt, insbesondere die Azimutwinkeldaten, werden aus dem zeitgleich detektierten Reflexionssignal vorzugsweise durch Phasen- und/oder Amplitudenvergleich ermittelt. Insbesondere enthalten die zeitgleich von unterschiedlichen, in Umfangsrichtung beabstandeten Empfangsantennen empfangenen Reflexionssignale Informationen über reflektierende Objekte bezüglich der Azimutrichtung. Diese Informationen können verwendet werden, um die Azimutrichtung eines Zielobjekts zu ermitteln.

Gemäß Ausgestaltungen kann ein Verfahrens- oder Betriebsschritt dazu eingerichtet sein, die Entfernung, beispielsweise über Laufzeiteffekte der Radarsignale, und/oder die Annäherungsgeschwindigkeit des Zielobjekts, z.B. über Dopplereffekte, basierend auf empfangenen Radarsignalen zu ermitteln.

Mithin können durch einen entsprechenden Betrieb der Steuer- und Auswerteelektronik Zielobjektdaten, umfassend beispielsweise Positionsdaten und/oder Geschwindigkeitsdaten des Zielobjekts, bezüglich eines flugkörpereigenen (Kugel-)Koordinatensystems, ermittelt werden. Bei der Ermittlung der Zielobjektdaten können, wie beschrieben, die Ausrichtung der Antennenhauptkeule über dem Polarwinkel, und die in den empfangenen reflektierten Radarsignalen enthaltenen Informationen zum Azimutwinkel, zum Abstand und zur Geschwindigkeit des Zielobjekts ausgewertet und zur Zielerfassung und/oder Zielnavigation verwendet werden.

Die mittels der Radarsensoreinheit ermittelten Zielobjektdaten können auf Grundlage von Zielobjektdaten einer externen Sensoreinheit und/oder basierend auf Zielobjektdaten einer flugkörpereigenen weiteren Zielerfassungseinheit, die als optische oder Infrarot basierte Zielerfassungseinheit beispielsweise in der Flugkörperspitze integriert sein kann, kombiniert werden, wodurch insbesondere die Zielerfassung und/oder Zielnavigation verbessert werden kann/können.

Gemäß Ausgestaltungen kann die Elektronikeinheit zumindest einen Sendekanal umfassen, und die Elektronikeinheit kann einen oder mehrere, insbesondere zumindest zwei, Empfangskanäle umfassen.

Die Elektronikeinheit kann dazu eingerichtet sein, den zumindest einen Sendekanal mit einer als Sendeantenne betreibbaren Radarantenne zu verbinden, die mit einer in Richtung des Zielobjekts ausrichtbaren Antennenhauptkeule betreibbar ist, und den zumindest einen Empfangskanal mit einer als Empfangsantenne betreibbaren Radarantenne zur Erfassung der am Zielobjekt reflektierten Radarsignale zu verbinden. Mithin können die weiter oben beschriebenen Zielobjektdaten zur Entfernung, zum Polarwinkel, zum Azimutwinkel, zur Geschwindigkeit und/oder zur Beschleunigung des Zielobjekts ermittelt werden, basierend auf der hierin vorgeschlagenen, an einer Umfangsfläche des Flugkörperkorpus montierten oder integrierten Radarsensoreinheit. Bei Bedarf kann die Ermittlung der Zielobjektdaten alleinig auf den durch die Radarsensoreinheit ermittelten Daten beruhen, wodurch eine ansonsten mit optischen oder Infrarot basierten Zielerfassungssensoreinheiten bestückte Flugkörperspitze anderweitig funktionalisiert werden kann.

Gemäß Ausgestaltungen kann die Umfangsfläche, an der die zumindest eine streifenförmige Radarantenne montiert oder integriert ist, in Längsrichtung der Radarantenne, vorzugsweise auch in Richtung der Flugkörperlängsachse, im Wesentlichen planar, insbesondere bezüglich der Längsachse der Radarantenne und/oder bezüglich der Flugkörperlängsachse nicht gekrümmt, ausgebildet sein. Die Umfangsfläche kann insbesondere zylinderförmig ausgebildet sein. Beispielsweise kann die Radarantenne bzw. können die Radarantennen der Radarsensoreinheit umfangsseitig einer zur Flugkörperlängsachse konzentrischen, zylindrischen Außenwendung montiert oder integriert sein.

Die Umfangsfläche kann in einem Bereich eines Lenkteils des Flugkörperkorpus gelegen sein, in dem eine Lenk- und Steuereinheit des Flugkörpers angeordnet ist, beispielsweise in einem Segment des Flugkörperkorpus zwischen Flugkörperspitze oder - nase und antriebsseitigem Ende des Flugkörpers. In diesem Zusammenhang soll erwähnt werden, dass der Flugkörper von der Flugkörperspitze abgewandt eine Antriebseinheit umfassen kann, die beispielsweise einen Antrieb und mehrere Lenk- und Leitklappen zur Richtungssteuerung aufweisen kann.

Das Lenkteil kann eine oder mehrere Rechnereinheiten zur Flug-, Bewegungs-, Antriebssteuerung und/oder zur Flug- und Zielnavigation umfassen.

Ferner kann die Elektronikeinheit zum Betrieb der Radarsensoreinheit im Bereich des Lenkteils aufgenommen sein, wobei die Elektronikeinheit und/oder Elektronikkomponenten der Elektronikeinheit zumindest teilweise im Zusammenhang mit einer oder mehreren Rechnereinheiten der Lenkeinheit implementiert sein können. Die Rechnereinheit/en und/oder Elektronikeinheit kann/können, wie bereits erwähnt, ausgebildet und eingerichtet sein, dass diese Steuersignale zur Abstrahlung von Radarsignalen, d.h. Radarstrahlung, erzeugen. Fernern kann/können die Rechnereinheit/en und/oder Elektronikeinheit dazu ausgebildet und eingerichtet sein, reflektierte Radarsignale, d.h. Radarstrahlung, zu empfangen und korrespondierende Empfangsdaten zu verarbeiten. Insbesondere kann/können die Rechnereinheit/en und/oder Elektronikeinheit dazu ausgebildet und eingerichtet sein, die empfangene Radarstrahlung dahingehend auszuwerten, ob ein oder das Zielobjekt im Sichtfeld der Radarsensoreinheit gelegen ist.

Basierend auf der Auswertung der empfangenen Radarstrahlung kann/können die Rechnereinheit/en und/oder Elektronikeinheit weitere Steuersignale zur Flugsteuerung und/oder zur Einstellung von Betriebsparametern der Radarsensoreinheit ermitteln, insbesondere berechnen.

Die Betriebsparameter der Radarsensoreinheit können insbesondere solche Betriebsparameter umfassen, mit welchen die Modulation der Radarsensoreinheit, die Ausrichtung der Antennenhauptkeule/n und/oder der Öffnungswinkel der Antennenhauptkeule/n eingestellt werden kann.

Ferner können die Betriebsparameter solche Betriebsparameter umfassen, die die Erfassung von Radarstrahlung betreffen, beispielsweise ob Radarstrahlung lediglich von einer oder zeitgleich von mehreren Radarantennen erfasst wird.

Ferner können die Betriebsparameter solche Betriebsparameter umfassen die festlegen ob und wann eine Radarantenne in einem Detektionszyklus als Sendeantenne oder Empfangsantenne betrieben wird.

Mithin kann die Radarsensoreinheit derart betreibbar eingerichtet sein, dass diese ein oder auch mehrere Zielobjekte auf Basis von Radarstrahlung, d.h. Radarsignalen, erfassen kann.

Die Betriebsparameter zum Betrieb der Radarsensoreinheit können auf Grundlage von Zielobjektdaten, beispielsweise zur Position, zur Geschwindigkeit, zur Ausrichtung und zur Beschleunigung des Zielobjekts, auf Grundlage von Flugkörperdaten, beispielsweise zur Position, zur Geschwindigkeit, zur Ausrichtung und zur Beschleunigung des Flugkörpers, und/oder auf Grundlage der Daten der Radarsensoreinheit aus vorhergehenden Detektionszyklen ermittelt werden.

Zumindest in einer Anfangsflugphase, beispielsweise nach Start des Flugkörpers, in der noch keine flugkörpereigenen Daten zum Zielobjektdaten vorliegen, können Daten zum Zielobjekt, wie beispielsweise Position, Geschwindigkeit und Beschleunigung, von einer externen Einheit vom Flugkörper empfangen, ausgewertet und zur Flugsteuerung und zum Einstellen der Betriebsparameter der Radarsensoreinheit verwendet werden.

Bei der externen Einheit kann es sich beispielsweise um eine Abschuss- oder Kontrolleinheit eines dem Flugkörper zugeordneten Waffensystems handeln.

Nach Erfassung eines Zielobjekts mittels der flugkörpereigenen Radarsensoreinheit und gegebenenfalls unter Verwendung eines weiteren flugkörpereigenen Zielerfassungssensors können jeweilige Zielobjektdaten zur Steuerung des Betriebs der Radarsensoreinheit, zur Flugsteuerung des Flugkörpers und/oder zur Navigation des Flugkörpers verwendet werden. Jedoch ist in solchen Flugphasen eine Berücksichtigung externer Zielobjektdaten und/oder Flugkörperdaten möglich.

Insbesondere ist es auf Grundlage der von der Radarsensoreinheit zum Zielobjekt ermittelten Zielobjektdaten möglich, die Bewegung des Flugkörpers längs einer Flugbahn und die Betriebsdaten der Radarsensoreinheit in Abhängigkeit der Zielobjektdaten adaptiv anzupassen.

Die adaptive Anpassung der Betriebsparameter der Radarsensoreinheit kann beispielsweise hinsichtlich einer Erfassbarkeit von Abstand, Polarwinkel und Azimutwinkel des Zielobjekts, sowie hinsichtlich eines jeweils optimalen Signal-zu-Rauschverhältnisses und anderer relevanter Detektionseigenschaften der Radarsensoreinheit, wie z.B. Detektionsleistung, Zielkontrast usw., erfolgen. Die Rechnereinheit/en und/oder Elektronikeinheit kann/können dazu entsprechend eingerichtet und programmiert oder programmierbar eingerichtet sein.

Unter der Formulierung "adaptiv anpassen" soll insbesondere verstanden werden, dass die Betriebsparameter situationsbezogen angepasst bzw. verändert werden, wobei die situationsbezogene Anpassung zumindest basierend auf Informationen zum Zielobjekt, d.h. zumindest basierend auf den Zielobjektdaten, erfolgt. Insbesondere soll der Begriff "adaptiv" so verstanden werden, dass die Anpassung der Flugbahn und der Betriebsdaten jeweils in Reaktion auf Änderungen der Zielobjektdaten erfolgen. Durch eine adaptive Anpassung der Betriebsparameter ist es insbesondere möglich, die Detektionscharakteristik der Radarsensoreinheit, insbesondere die Sende- und Empfangscharakteristik der Radarsensoreinheit, so einzustellen, dass das Zielobjekt zuverlässig erkannt, und dass dessen Position und Koordinaten, umfassend beispielsweise Polarwinkel, Azimutwinkel und Entfernung, und ggf. weitere Zielobjektdaten zuverlässig ermittelt werden können.

Bei einer Anordnung der Radarantennen im Bereich des Lenkteils, oder allgemeiner in einem Flugkörpersegment, in dem die Elektronikkomponenten zur Flugkörpersteuerung aufgenommen sind, können vergleichsweise kurze Signal- und Steuerleitungen verwirklicht werden, wodurch beispielsweise die Störanfälligkeit verringert werden kann.

Die Radarsensoreinheit kann eine oder mehrere Radarsensorbaugruppen aufweisen und/oder als eine einzige Baugruppe ausgebildet sein, die eingerichtet ist/sind zur Montage an einem Flugkörperkorpus. Beispielsweise kann eine entsprechende Baugruppe als ein Segment des Flugkörpers ausgebildet sein, mit längsseitigen Anschlussenden zum Anschluss und zur Montage an weiteren Flugkörpersegmenten, beispielsweise zwischen Flugkörperspitze und antriebsseitigem Ende des Flugkörpers, insbesondere zwischen Flugkörperspitze und einem in Richtung des antriebsseitigen Endes anschließenden Gefechtskopf des Flugkörpers. In dieser Ausgestaltung handelt es sich bei dem Flugkörper vorzugsweise um einen Lenkflugkörper zur Bekämpfung von Zielobjekten.

Die Radarantennen der Radarsensoreinheit sind vorzugsweise derart montiert oder integriert, dass diese im Wesentlichen bündig mit der Umfangsfläche des Flugkörpers abschließen, insbesondere derart, dass gegenüber einem ansonsten identischen Flugkörper ohne die Radarantennen im Wesentlichen gleiche aerodynamische Eigenschaften erreicht werden können, insbesondere, dass im Wesentlichen keine aerodynamischen Nachteile aus der Montage oder Integration der Radarantennen entstehen.

Bei der hier vorgeschlagenen Montage oder Integration der Radarsensoren an oder in einer Umfangsfläche kann die Mittenachse bzw. Zentral- oder Hauptachse des Sichtfelds, insbesondere der Antennenhauptkeule, der Radarsensoreinheit schräg zur Flugkörperlängsachse ausgerichtet werden, mit einem von Null verschiedenen Polarwinkel. Vorzugsweise ist die Mittenachse zu dem bezüglich der Flugkörperspitze vorderen Halbraum hin ausgerichtet, und schließt mit der vom antriebsseitigen Ende des Flugkörpers zur Flugkörperspitze zeigenden Richtung einen Zwischenwinkel ein, der kleiner als 90 Grad ist, mithin also einen spitzen Zwischenwinkel.

Der hierin verwendete Begriff Sichtfeld soll allgemein verstanden werden, und nicht auf Radarsensoren beschränkt sein, sondern entsprechend auch für Infrarot-Sensoren, optische Sensoren, oder andere Sensoren gelten, die dazu geeignet sind, bei Integration in den Flugkörper ein Zielobjekt erfassen zu können.

An dieser Stelle sei darauf hingewiesen, dass funktionelle und/oder strukturelle Merkmale von Ausgestaltungen des erfindungsgemäßen Flugkörpers und der Radarsensoreinheit sowie etwaige verfahrensseitige Merkmale zu deren Betrieb und/oder Steuerung auch in einer jeweils anderen Kategorie (Erzeugnis, Verfahren, Verwendung) beansprucht werden können.

Der im Rahmen der Beschreibung von erfindungsgemäßen Ausgestaltungen und Ausführungsformen sowie in den Ansprüchen verwendete Begriff "insbesondere" soll nicht einschränkend verstanden werden, sondern dahingehend, dass die durch "insbesondere" gekennzeichneten Merkmale, sofern nicht anderweitig angegeben, spezielle Ausgestaltungen oder Ausführungsformen betreffen.

Beispielhafte Ausgestaltungen und Ausführungsformen der Erfindung werden nachfolgend anhand der Figuren beschrieben. Es zeigen:

FIG. 1 beispielhaft einen Lenkflugkörper mit einer Radarsensoreinheit;

FIG. 2 eine Seitenprofilansicht eines Abschnitts des Lenkflugkörpers nach FIG. 1;

FIG. 3 eine zur Seitenprofilansicht der FIG. 2 senkrechte Frontprofilansicht des Lenkflugkörpers nach FIG. 1;

FIG. 4 einen vergrößerten Abschnitt des Lenkflugkörpers im Bereich der Radarsensoreinheit;

FIG. 5 eine Radarantennengruppe der FIG. 4 im Detail;

FIG. 6 ein Antennendiagramm einer einzelnen Radarantenne in einem ersten Betriebsmodus;

FIG. 7 ein Antennendiagramm einer einzelnen Radarantenne in einem zweiten Betriebsmodus;

FIG. 8 eine schematische Querschnittsdarstellung des Flugkörpers im Bereich der Radarsensoreinheit;

FIG. 9 eine Schaltungsanordnung der Radarsensoreinheit;

FIG. 10 beispielhaft den Betrieb der Radarsensoreinheit zur Ermittlung des Polarwinkels eines Zielobjekts; und

FIG. 11 beispielhaft den Betrieb der Radarsensoreinheit zur Ermittlung des Azimutwinkels eines Zielobjekts.

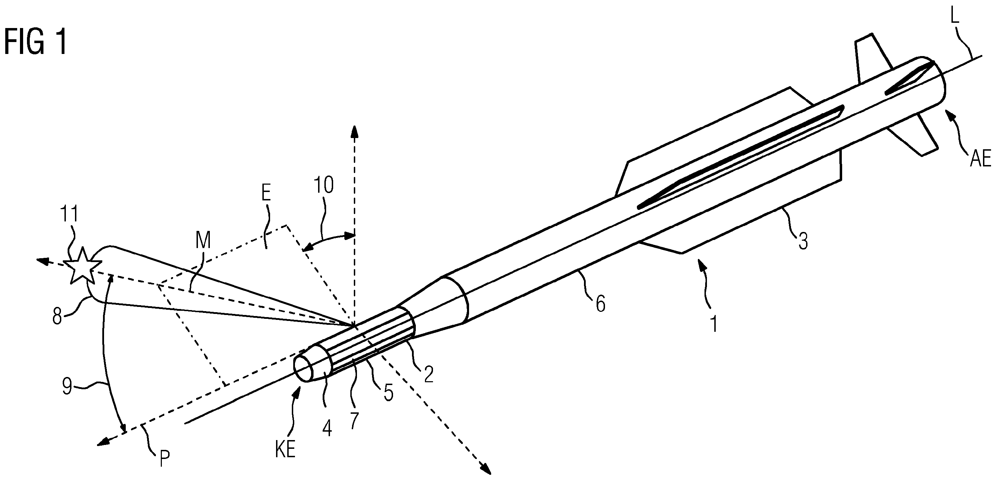

FIG. 1 zeigt ein Ausführungsbeispiel eines erfindungsgemäß ausgebildeten Lenkflugkörpers 1 mit einer Radarsensoreinheit 2.

Der Lenkflugkörper 1, im Weiteren auch kurz Flugkörper 1 genannt, weist einen Antrieb 3 auf, der ein antriebsseitiges Ende AE des Flugkörpers 1 definiert. An dem davon in Richtung der Flugkörperlängsachse L abgewandten Ende, d.h. an der Flugkörperspitze, weist der Flugkörper 1 einen Flugkörperkopf 4 auf, der ein kopfseitiges Ende KE definiert. Am antriebsseitigen Ende AE weist der Flugkörper 1 mehrere nicht näher bezeichnete Flossen zur Lenkung und/oder zur Flugstabilisierung auf.

An einem sich an den Flugkörperkopf 4 anschließenden Segment weist der Flugkörper 1 in Richtung des antriebsseitigen Endes AE ein Lenkteil 5 auf, an das sich zum Antrieb 3 hin beispielhaft ein Gefechtskopf 6 anschließt. Der Aufbau in Richtung der Flugkörperlängsachse L kann von dem konkret gezeigten Aufbau abweichen.

Das Lenkteil 5 umfasst eine oder mehrere (nicht explizit gezeigte) Rechner- und Steuereinheiten zur Lenkung des Flugkörpers 1. Ferner sind im Bereich des Lenkteils 5 Elektronikkomponenten der Radarsensoreinheit aufgenommen.

Die Radarsensoreinheit 2 umfasst mehrere Radarantennen 7 die an einer in Richtung der Flugkörperlängsachse L planaren, in Umfangsrichtung jedoch zylinderförmig gekrümmten Umfangsfläche montiert und integriert sind.

Die Radarsensoren 7 sind aus aerodynamischen Gründen im Wesentlichen bündig mit der Umfangsfläche ausgebildet.

Die Anordnung im Bereich des Lenkteils 5 hat insbesondere den Vorteil, dass kurze Signalwege zwischen den Radarantennen 7 und zugeordneten Elektronikkomponenten der Radarsensoreinheit 2 erreicht werden können.

Die Radarantennen 7 sind streifenförmig ausgebildet, wobei die Längsrichtung der streifenförmigen Radarantennen 7 in Richtung der Flugkörperlängsachse L ausgerichtet ist. Im vorliegenden Beispiel ist die Längsrichtung der Radarantennen 7 jeweils parallel zur Flugkörperlängsachse L.

Im Betrieb der Radarsensoreinheit 2 können mit den parallel zur Flugkörperlängsachse L ausgerichteten streifenförmigen Radarantennen 7 bei entsprechend eingestellten Betriebsparametern Antennenhauptkeulen 8 erzeugt werden, die über dem Polarwinkel 9 (Theta) relativ schmal fokussieren, insbesondere über einen definierten Polarwinkelbereich der Antennenhauptkeule 8. Der definierte Polarwinkelbereich kann beispielswiese kleiner 30 Grad sein.

Dabei ist der Polarwinkel 9 bezüglich eines flugkörpereigenen, rechtshändigen Kugelkoordinatensystems definiert, dessen Ursprung z.B. in der Mitte der Längsrichtung einer Radarantenne 7 liegt, und das eine Polachse P aufweist, die parallel zur Längsrichtung der Radarantenne 7 ist. Im vorliegenden Beispiel ist die Polachse P auch parallel zur Flugkörperlängsachse L. Die positive Polachsenrichtung ist definiert durch die Richtung, in der die Radarantenne 7 vom antriebsseitigen Ende AE zum kopfseitigen Ende verläuft. Der Polarwinkel 9 ist dabei zwischen der Polachse P und der Mittenachse M der Antennenhauptkeule 8 der Radarantenne 7 in Polarwinkelrichtung gemessen. In Umfangsrichtung zur Polachse P ist entsprechend der Azimutwinkel 10 (Phi) als Drehwinkel bezüglich einer parallel zur Polachse P verlaufenden und die Polachse P enthaltenden Ebene E definiert.

Mit einer entsprechend ausgerichteten Antennenhauptkeule 8 kann mithin ein schräg zur Flugkörperlängsachse L gelegenes Raumsegment zur Detektion und Erfassung eines Zielobjekts 11 ausgeleuchtet werden.

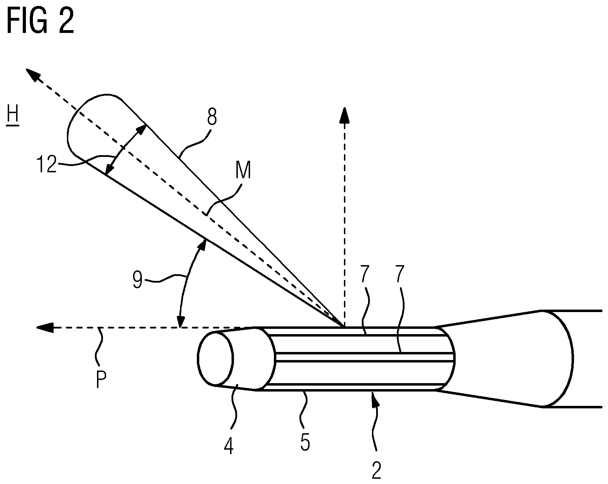

FIG. 2 zeigt zur schematischen Verdeutlichung der Ausrichtung der Antennenhauptkeule 8 eine Seitenprofilansicht des Lenkflugkörpers 1 im Bereich des kopfseitigen Endes KE bezüglich der durch die Polachse P und den Koordinatenursprung des Kugelkoordinatensystems verlaufenden Polar-Hauptebene des Kugelkoordinatensystems. Wie aus der FIG. 2 ersichtlich ist, ist die Antennenhauptkeule 8 gegenüber der Polachse P um einen Polarwinkel 9 gedreht, und fokussiert in der Polar-Hauptebene über einen definierten Polarwinkelbereich, d.h. über einen definierten Polar-Öffnungswinkel 12. Der Polar-Öffnungswinkel 12 der Antennenhauptkeule 8 kann, beispielsweise je nach Betriebsparameter der Radarsensoreinheit 2, im jeweils definierten Bereich der Antennenhauptkeule 8 z.B. kleiner als 30 Grad sein.

Je nach Betriebsparameter kann der Polarwinkel 9 der Antennenhauptkeule 8 zum vorderen Halbraum H hin ausgerichtet werden, wobei der Polarwinkel 9 bezüglich des vorderen Halbraums H beispielsweise zwischen nahe Null Grad und 90 Grad durch entsprechenden Betrieb der Radarantennen 7 eingestellt werden kann. Mit anderen Worten kann bei entsprechendem Betrieb der Radarantennen 7 die Antennenhauptkeule 8 im vorderen Halbraum H in dem genannten Winkelbereich geschwenkt werden. Eine Schwenkung der Antennenhauptkeule 8 in den hinteren Halbraum kann bei entsprechendem Betrieb der Radarantennen 7 ebenfalls erreicht werden, wobei zur Erfassung eines Zielobjekts 11, zur Verfolgung eines Zielobjekts 11 und zur Zielnavigation des Lenkflugkörpers 1 zum Zielobjekt 11 hauptsächlich die Ausleuchtung des vorderen Halbraums H von Bedeutung ist.

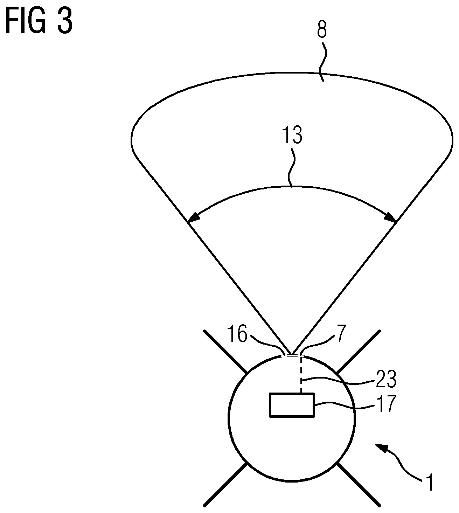

FIG. 3 zeigt eine zur Seitenprofilansicht der FIG. 2 senkrechte Frontprofilansicht des Lenkflugkörpers 1 bezüglich der senkrecht durch die Polachse P und den Koordinatenursprung verlaufenden Azimut-Hauptebene des Kugelkoordinatensystems. Wie aus der schematischen Darstellung der FIG. 3 ersichtlich ist, überstreicht die Antennenhauptkeule 8 in der Azimut-Hauptebene im definierten Bereich der Antennenhauptkeule 8 einen Azimut-Öffnungswinkel 13, der je nach Betriebsparameter der Radarsensoreinheit 2 beispielsweise größer als 30 Grad sein kann.

Aus der Zusammensicht der FIG. 1 bis FIG. 3 ergibt sich insbesondere, dass die Antennenhauptkeule 8 seitlich zur Flugkörperlängsachse L ausgerichtet ist und einen entsprechenden seitlichen Raumbereich ausleuchten kann.

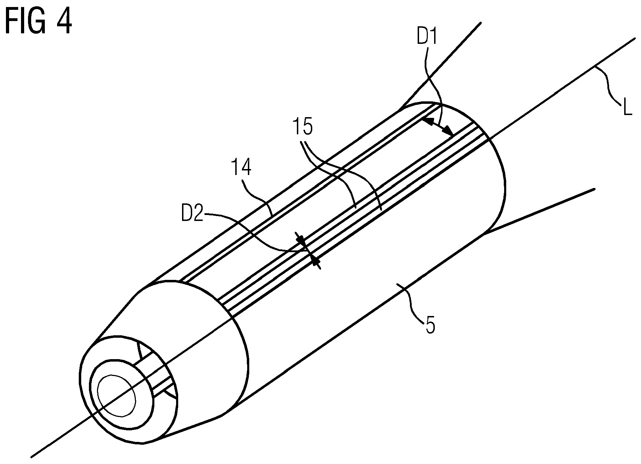

FIG. 4 zeigt einen vergrößerten Abschnitt des Lenkflugkörpers 1 im Bereich der Radarsensoreinheit 2. Konkret zeigt FIG. 4 den Bereich des Lenkteils 5 mit einer an dessen Umfang angebrachten Radarantennengruppe. Die Radarantennengruppe umfasst eine Sendeantenne 14 und zwei der Sendeantenne 14 zugeordnete Empfangsantennen 15.

Die in FIG. 1 gezeigte Radarsensoreinheit 2 umfasst mehrere solcher Radarantennengruppen, wobei in FIG. 4 aus Gründen der Anschaulichkeit lediglich eine Radarantennengruppe gezeigt ist. Insoweit können an der Umfangsfläche des Lenkteils 5 mehrere Radarantennen 7 und Radarantennengruppen vorhanden sein, z.B. entsprechend einer gleichverteilten Anordnung in Umfangsrichtung. Beispielsweise können insgesamt vier solcher Radarantennengruppen am Umfang des Lenkteils 5 verteilt angeordnet sein, mit in etwa gleichen Abständen in Umfangsrichtung.

Die Sendeantenne 14 und Empfangsantennen 15 weisen eine in Flugkörperlängsachse L betrachtet langgestreckte Form auf, d.h. sie sind jeweils streifenförmig ausgebildet. Eine streifenförmige Radarantenne 7 kann beispielsweise ein Verhältnis von Länge zu Breite im Bereich von 30:1 bis 40:1 aufweisen.

Bezüglich der Flugkörperlängsachse L sind die Sendeantenne 14 und die Empfangsantennen 15 im Wesentlichen gleich lang. Anfangs- und Endpunkte sind jeweils in Ebenen gelegen, die senkrecht zur Flugkörperlängsachse L verlaufen. Insbesondere weisen die Sendeantenne 14 und die Empfangsantennen 15 im gezeigten Beispiel in Richtung der Flugkörperlängsachse L im Wesentlichen keinen Versatz auf. Wie oben bereits diskutiert können ausgewählte Radarantennen 7 in Richtung der Flugkörperlängsachse L versetzt sein, beispielsweise um ein Überkoppeln von Radarsignalen zu vermeiden.

Die streifenförmige Sendeantenne 14 und die streifenförmigen Empfangsantennen 15 sind im vorliegenden Beispiel als Leckwellenantennen ausgebildet.

Möglich sind jedoch auch andere Antennenarten, die, wie Leckwellenantennen, eine Ausrichtung der Antennenhauptkeule 8 in Polarwinkelrichtung ermöglichen. Beispielhaft genannt seien in diesem Zusammenhang phasengesteuerte Gruppenantennen, die eine Ausrichtung der Antennenhauptkeule durch entsprechende Einstellung der Phasen der Antennenelemente der Gruppenantenne ermöglichen.

Bei Leckwellenantennen kann die Ausrichtung der Antennenhauptkeule 8 beispielsweise durch Veränderung der Frequenz angepasst werden. Die Leckwellenantennen können beispielsweise als substratintegrierte Leckwellenantennen implementiert sein.

Die Anzahl der Radarantennen einer Radarantennengruppe kann vom gezeigten Beispiel abweichen. Insbesondere kann eine Radarantennengruppe mehr als lediglich eine Sendeantenne umfassen. Ferner ist es möglich, dass lediglich eine Empfangsantenne oder mehr als zwei Empfangsantennen einer Radarantennengruppe zugeordnet sind.

In Ausgestaltungen ist es auch möglich, dass eine Radarantenne 7 eingerichtet ist zum wahlweisen Betrieb als Sendeantenne 14 und Empfangsantenne 15. Beispielsweise kann eine entsprechende Radarantenne 7 so eingerichtet sein, dass diese wechselweise als Sendeantenne 14 und Empfangsantenne 15 schaltbar ist. Ferner ist es möglich, dass der wahlweise Betrieb der Radarantenne 7 als Sendeantenne 14 und Empfangsantenne 15 unter Verwendung einer Hochfrequenz-Sende-Empfangsweiche, beispielsweise eines Zirkulators oder eines Kopplers, umgesetzt ist.

Bei solchen Ausgestaltungen mit wahlweisem Betrieb einer Radarantenne 7 kann die Anzahl der Radarantennen reduziert werden, und die Radarsensoreinheit durch entsprechenden Betrieb zwischen Sende- und Empfangsmodus umgeschaltet werden.

Ferner ist es möglich, dass in Umfangsrichtung verschiedene Radarantennengruppen angeordnet sind, beispielsweise umfassend lediglich eine - oder auch mehrere - reziprok betreibbare Radarantennen oder umfassend eine oder mehrere explizit als Sendeantennen eingerichtete Radarantennen und eine oder mehrere als Empfangsantennen eingerichtete Radarantennen. Darüber hinaus ist es möglich, dass die relative Anordnung der Radarantennen von der in FIG. 4 gezeigten Anordnung abweicht. Ferner können mehrere Radarsensoreinheiten 2 am Flugkörperkorpus vorhanden sein, beispielsweise an unterschiedlichen Positionen in Richtung der Flugkörperlängsachse L.

Die Sendeantenne 14 weist in Umfangsrichtung von den Empfangsantennen 15 einen ersten Abstand D1 auf, und die Empfangsantennen 15 der Radarantennengruppe weisen einen in Umfangsrichtung gemessenen gegenseitigen zweiten Abstand D2 auf. Der zweite Abstand D2 kann beispielsweise kleiner, gleich oder größer als eine Radarwellenlänge sein, mit der die Radarsensoreinheit 2 betrieben wird. Vorzugsweise liegt der zweite Abstand D2 in der Größenordnung der Radarwellenlänge. Der zweite Abstand D2 kann, je nach Ausgestaltung der Radarantennengruppe, kleiner, gleich oder größer als der erste Abstand D1 sein. Beispielsweise kann der zweite Abstand D2 dann größer als der erste Abstand D1 gewählt sein, wenn eine solche Beabstandung zur Reduktion von Überkopplungen zwischen den Radarantennen 7 erforderlich ist. Insoweit sind die in den Figuren konkret gezeigten ersten und zweiten Abstände D1 und D2 lediglich im Sinne von nicht beschränkenden Ausführungsbeispielen zu verstehen.

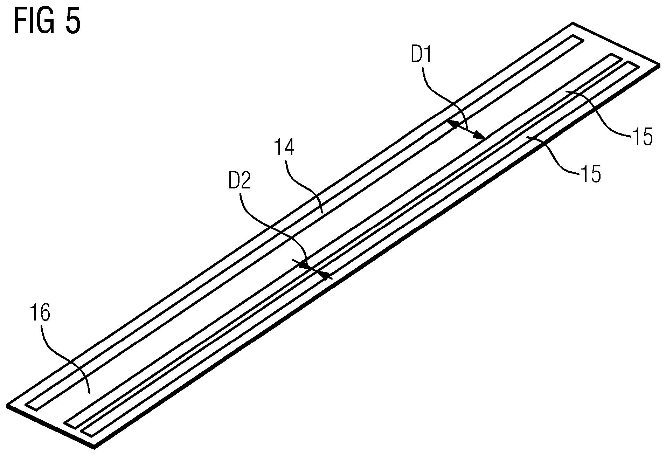

FIG. 5 zeigt die Radarantennengruppe der FIG. 4 im Detail. Die Sendeantenne 14 und die beiden Empfangsantennen 15 sind an oder auf einer Trägerplatte 16 montiert oder integriert. Die Trägerplatte 16 kann dabei derart ausgebildet sein, dass diese an einer äußeren Wandung des Lenkflugkörpers außenseitig montiert werden kann, derart, dass die Sendeantenne 14 und Empfangsantennen 15 nach außen hin orientiert sind. Die Trägerplatte 16 kann ferner so eingerichtet sein, dass diese nach Montage am Flugkörperkorpus einen Teil der äußeren Abdeckung, d.h. einen Teil der Außenhaut, des Lenkflugkörpers 1 bildet.

An der von der Sendeantenne 14 und den Empfangsantennen 15 abgewandten Seite der Trägerplatte 16 können jeweilige Anschlussschnittstellen für die Sendeantenne 14 und die Empfangsantennen 15 vorhanden sein, mit denen die Sende- und Empfangsantennen 14, 15 mit einer zum Betrieb der Radarsensoreinheit 2 eingerichteten Elektronikeinheit signal- und steuerungstechnisch verbunden werden können. Die Trägerplatte 16 kann insbesondere als eine Abdeckung für die darunter im Flugkörperkorpus angeordnete Elektronikeinheit 17 fungieren (FIG. 3). Die in FIG. 3 schematisch im inneren des Flugkörperkorpus angeordnete Elektronikeinheit 17 ist über Hochfrequenzleitungen 23 mit den Radarantennen 7 verbunden.

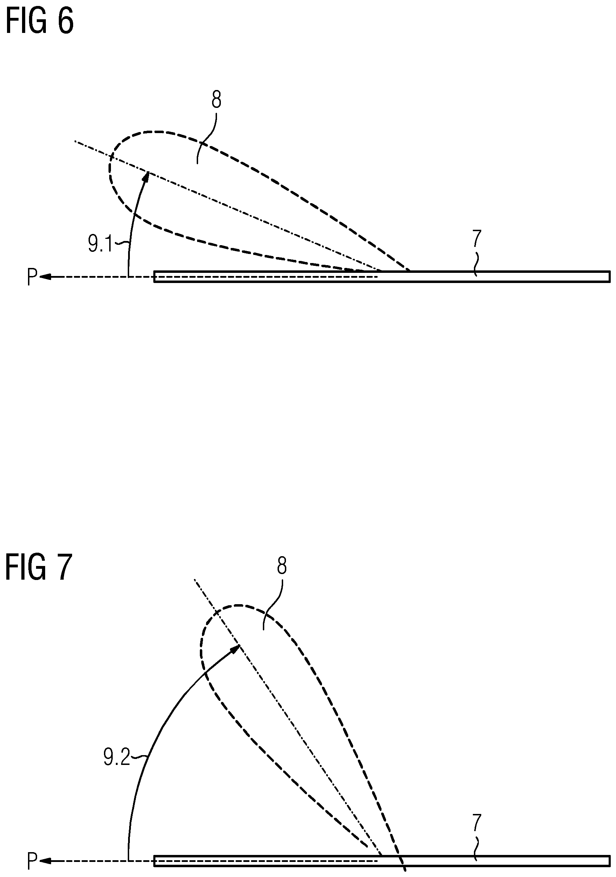

FIG. 6 zeigt ein Antennendiagramm einer einzelnen Radarantenne 7 in einem ersten Betriebsmodus, und FIG. 7 zeigt ein Antennendiagramm einer einzelnen Radarantenne 7 in einem zweiten Betriebsmodus. Die Radarantennen 7 sind als streifenförmige Leckwellenantennen ausgebildet.

Im ersten Betriebsmodus der FIG. 6 wird die Radarantenne 7 mit einer ersten Frequenz betrieben und weist eine Antennenhauptkeule 8 mit einem ersten Polarwinkel 9.1 auf.

Im zweiten Betriebsmodus der FIG. 7 wird die Radarantenne 7 mit einer zweiten Frequenz betrieben und weist eine Antennenhauptkeule 8 mit einem zweiten Polarwinkel 9.2 auf.

Der erste Polarwinkel 9.1 ist, wie aus einer Zusammenschau der FIG. 6 und FIG. 7 ersichtlich, kleiner als der zweite Polarwinkel 9.2. Mithin ist es bei Verwendung entsprechender Radarantennen 7 als Sendeantennen 14 möglich, die Antennenhauptkeule 8 zu schwenken. Basierend auf einer Schwenkung der Antennenhauptkeule 8 kann aus den jeweils erfassten reflektierten Radarsignalen insbesondere der Polarwinkel eines im Sichtfeld der Radarsensoreinheit 2 gelegenen Zielobjekts 11 ermittelt werden.

Insbesondere kann der Polarwinkel eines im Sichtfeld gelegenen Zielobjekts 11 durch Amplitudenvergleich der reflektierten Radarsignale ermittelt werden. Beispielsweise kann derjenige Polarwinkel eines abgestrahlten Radarsignals, dessen reflektierte Radarsignale im Amplitudenvergleich ein Amplitudenmaximum zeigen, als Polarwinkel des Zielobjekts 11 verwendet werden.

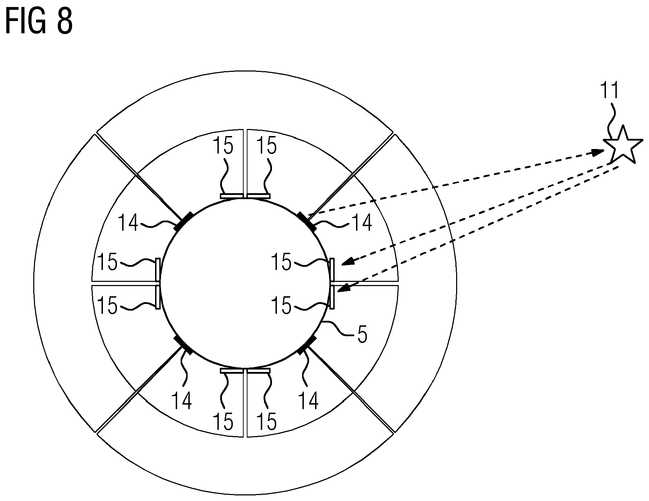

FIG. 8 zeigt eine schematische Querschnittsdarstellung des Lenkflugkörpers 1 im Bereich des Lenkteils 5, der Sendeantennen 14 und der Empfangsantennen 15.

In dem gezeigten Beispiel der FIG. 8 sind am Umfang des Lenkteils 5 insgesamt vier der in FIG. 4 und FIG. 5 gezeigten Radarantennengruppen angeordnet, wobei die Radarantennengruppen so verteilt sind, dass diese durch eine Drehung um einen Winkel von 90 Grad um die Flugkörperlängsachse L ineinander überführt werden können.

Mit der Anordnung der Sende- und Empfangsantennen 14, 15 gemäß der FIG. 8 kann in Kombination ein Sichtfeld erreicht werden, das über dem Azimutwinkel eine nahezu vollständige Raumabdeckung ermöglicht. In FIG. 8 liegt die Zeichnungsebene in oder parallel zur Azimut-Hauptebene des weiter oben beschriebenen Kugelkoordinatensystems.

Die in FIG. 8 gezeigte Anzahl von Radarantennengruppen kann in Ausgestaltungen auch variieren, und den jeweiligen Dimensionen des Lenkflugkörperquerschnitts angepasst sein. Bei größerem Durchmesser kann es z.B. erforderlich sein, mehr als vier Radarantennengruppen anzuordnen, um eine im Wesentlichen vollständige Raumabdeckung über dem Azimutwinkel zu erhalten. Entsprechendes gilt, falls eine Abdeckung mit weniger Radarantennengruppen möglich ist. Sind weniger Radarantennengruppen vorhanden als zur vollständigen Abdeckung des vollen Azimutwinkels erforderlich sind, kann die fehlende Abdeckung beispielsweise dadurch kompensiert werden, dass der Rollwinkel des Lenkflugkörpers 1 während des Flugs verändert, und dadurch das Sichtfeld gedreht wird. Eine Drehung des Sichtfelds basierend auf einer Anpassung des Rollwinkels kann beispielsweise basierend auf Daten zum Vorwissen über eine ungefähre Position des Zielobjekts 11 erfolgen.

Mit der Anordnung der Sende- und Empfangsantennen 14, 15 gemäß FIG. 8 ist es insbesondere möglich, den Polarwinkel und den Azimutwinkel eines Zielobjekts 11 zu ermitteln.

Der Polarwinkel eines Zielobjekts 11 kann, wie oben bereits beschrieben, beispielsweise dadurch ermittelt, zumindest jedoch eingegrenzt, werden, dass die Antennenhauptkeule/n 8 einer oder mehrerer Radarantennengruppen in aufeinander folgenden Betriebszyklen über den Polarwinkel geschwenkt werden, und die reflektierten Radarsignale aufeinanderfolgender Betriebszyklen hinsichtlich der Amplitude miteinander verglichen werden. Der Polarwinkel des Zielobjekts 11 kann dann als derjenige Polarwinkel angenommen werden, unter dem die Amplitude eines reflektierten Radarsignales am größten ist, insbesondere ein Maximum aufweist oder ein Maximum durchläuft. Beispielhaft wird hierbei auf in S.A. Hovanessian, 1982, Radar Detection & Tracking Systems, ISBN 0-89006-018-5 beschriebene Methoden verwiesen, die entsprechend angewandt werden können.

Der Azimutwinkel eines Zielobjekts 11 kann beispielsweise dadurch ermittelt werden, dass in einem Betriebszyklus von einer Sendeantenne 14 abgestrahlte und am Zielobjekt 11 reflektierte Radarsignale von benachbarten Empfangsantennen zeitgleich detektiert werden. Durch Phasen- und Amplitudenvergleich der zeitgleich detektierten reflektierten Radarsignale kann dann der Azimutwinkel des Zielobjekts 11 ermittelt werden. Beispielhaft wird hierbei auf in David K. Barton, 1985, Radar System Analysis, ISBN 0-89006-043-6 beschriebene Methoden verwiesen, die entsprechend angewandt werden können.

Zur Ermittlung des Polarwinkels und Azimutwinkels des Zielobjekts 11 können geeignete Suchstrategien zum Betrieb der Radarsensoreinheit 2 implementiert sein.

Der Abstand des Zielobjekts 11 kann beispielsweise durch Laufzeitmessungen ermittelt werden.

In dem in FIG. 8 gezeigten Beispiel kann der Azimutwinkel des schematisch dargestellten Zielobjekts 11 ermittelt werden, indem die links oben gelegene Sendeantenne 14 ein Radarsignal aussendet und reflektierte Radarsignale durch die der Radarantennengruppe zugeordneten Empfangsantennen 15 empfangen, insbesondere zeitgleich detektiert, werden, was in FIG. 8 schematisch durch gestrichelte Pfeile angedeutet ist. Aus Amplituden- und/oder Phasenvergleich der zeitgleich detektierten, reflektierten Radarsignale kann dann der Azimutwinkel des Zielobjekts 11 ermittelt werden.

Zur Ermittlung des Azimutwinkels des Zielobjekts 11 können jedoch auch Empfangsantennen 15 einer anderen, benachbarten Radarantennengruppe verwendet werden. Liegt das Zielobjekt 11 im Beispiel der FIG. 8 beispielsweise im Bereich über der rechts oben gelegenen Sendeantenne 14, so können die Empfangsantennen 15 und korrespondierende Empfangssignale der in FIG. 8 gegen den Uhrzeigersinn benachbart gelegenen Radarantennengruppe verwendet werden.

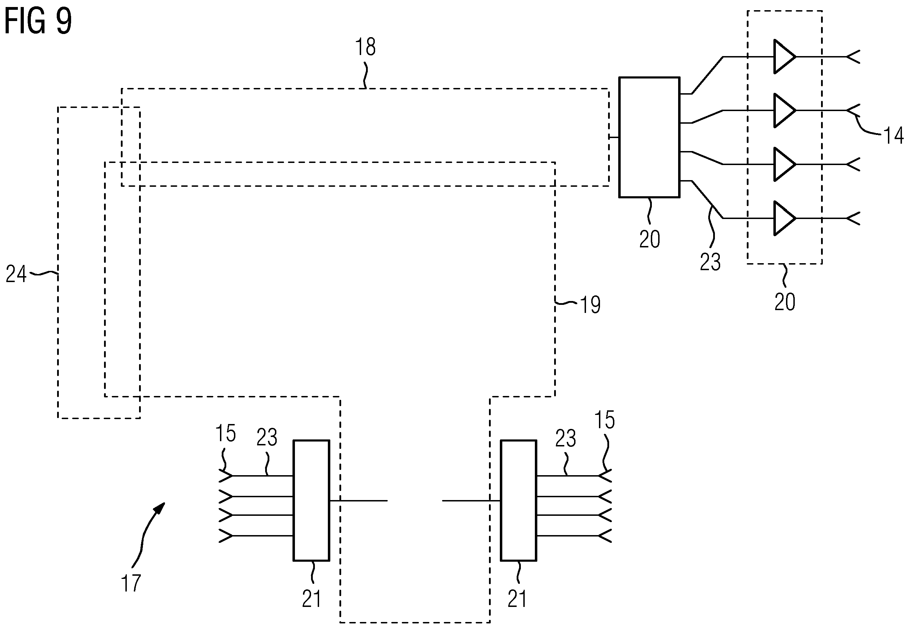

FIG. 9 zeigt beispielhaft eine Schaltungsanordnung, insbesondere eine Elektronikeinheit 17, zum Betrieb der Radarsensoren 7 zur Erfassung eines Zielobjekts 11.

Die Elektronikeinheit 17 umfasst einen Sendekanal 18 und zwei Empfangskanäle 19, wobei in FIG. 9 der Sendekanal 18 und die zwei Empfangskanäle 19 schematisch durch strichlinierte Rechtecke dargestellt sind.

Der Sendekanal 18 kann in der gezeigten Ausführung über ein Schaltnetzwerk 20 auf eine oder mehrere der vier Sendeantennen 14 geschalten werden, die über Hochfrequenzleitungen 23 mit der Elektronikeinheit 17 verbunden sind.

Die Elektronikeinheit 17 umfasst ferner zwei Empfangskanäle 19, wobei jeder Empfangskanal über weitere Schaltnetzwerke 21 auf eine oder mehrere von jeweils vier Empfangsantennen 15 geschaltet werden kann. Die Empfangsantennen 15 sind über Hochfrequenzleitungen 23 mit der Elektronikeinheit 17 verbunden.

Zur Erfassung eines Zielobjekts 11, d.h. zur Detektion und Lokalisierung eines Zielobjekts 11, können die Sendeantennen 14 und Empfangsantennen 15 in der oben beschriebenen Weise in jeweiligen Betriebszyklen aktiviert werden. Eine in FIG. 9 schematisch durch ein strichliniertes Rechteck dargestellte Auswerteeinheit 24 der Elektronikeinheit 17 kann die von den Empfangsantennen 15 erfassten Radarsignale auswerten und entsprechend zur Ermittlung von Zielobjektdaten heranziehen, beispielsweise zur Ermittlung von Abstand, Polarwinkel, Azimutwinkel, Geschwindigkeit und/oder Beschleunigung des Zielobjekts 11.

Ist es in einem Betriebszyklus beispielsweise nicht möglich, ein Zielobjekt 11 zu detektieren, kann/können in einem darauffolgenden Betriebszyklus eine oder mehrere andere Sendeantennen und/oder andere Empfangsantennen aktiviert werden, und empfangene Radarsignale können dahingehend ausgewertet werden, ob ein Zielobjekt 11 im jeweiligen Sichtfeld liegt. Entsprechend können Sende- und Empfangsantennen zur Ermittlung des Polarwinkels und Azimutwinkels und anderer Zielobjektdaten aktiviert werden.

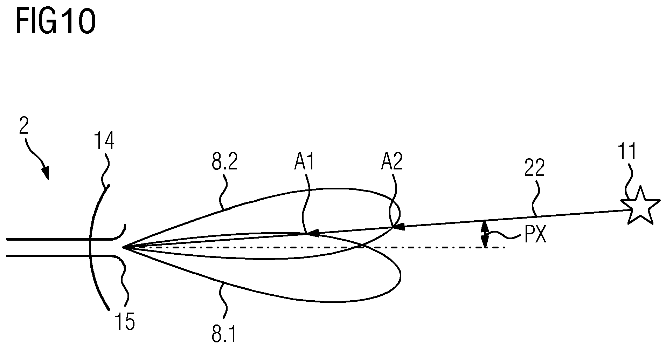

FIG. 10 zeigt beispielhaft und schematisch den Betrieb der Radarsensoreinheit 2 zur Ermittlung des Polarwinkels eines Zielobjekts 11. Konkret wird die Radarsensoreinheit 2 in aufeinanderfolgenden Betriebszyklen mit unterschiedlich über dem Polarwinkel ausgerichteten Antennenhauptkeulen 8 betrieben.

In einem ersten Betriebszyklus korrespondierend zu einer ersten Antennenhauptkeule 8.1 wird ein reflektiertes Radarsignal mit einer ersten Amplitude A1 gemessen, wobei die erste Amplitude A1 in der Darstellung der FIG. 10 dem Schnittpunkt der direkten Verbindungslinie 22 zwischen Radarsensoreinheit 2, d.h. der Empfangsantenne/n 15, und dem Zielobjekt 11 entspricht.

In einem zweiten Betriebszyklus korrespondierend zu einer zweiten Antennenhauptkeule 8.2 wird ein reflektiertes Radarsignal mit einer zweiten Amplitude A2 gemessen, wobei die zweite Amplitude A2 in der Darstellung der FIG. 10 dem Schnittpunkt der direkten Verbindungslinie 22 zwischen Radarsensoreinheit 2, d.h. der Empfangsantenne/n 15, und dem Zielobjekt 11 entspricht.

Wie aus FIG. 10 in schematischer Darstellung ersichtlich ist, ist die erste Amplitude A1 kleiner als die zweite Amplitude A2, woraus geschlossen werden kann, dass der Polarwinkel der zweiten Antennenhauptkeule 8.2 im zweiten Betriebszyklus näher am tatsächlichen Polarwinkel des Zielobjekts 11 liegt, als der Polarwinkel der ersten Antennenhauptkeule 8.1 des ersten Betriebszyklus.

Auf Basis mehrerer aufeinanderfolgender Betriebszyklen mit jeweils unterschiedlichen Ausrichtungen der Antennenhauptkeule 8 über dem Polarwinkel kann dann derjenige Polarwinkel PX dem Zielobjekt 11 zugeordnet werden, für den die Amplitude des reflektierten Radarsignals am größten ist, z.B. ein Maximum aufweist oder durchläuft. In FIG. 10 sind zur Veranschaulichung lediglich zwei Betriebszyklen dargestellt.

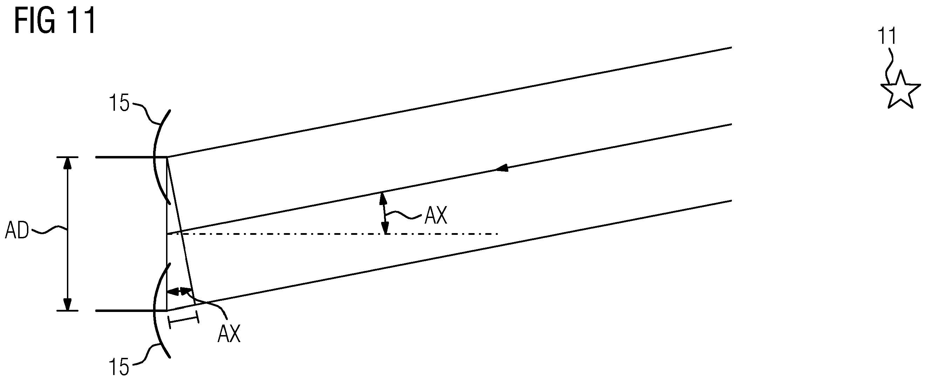

FIG. 11 zeigt beispielhaft und schematisch den Betrieb der Radarsensoreinheit 2 zur Ermittlung des Azimutwinkels AX eines Zielobjekts 11.

Hierbei werden in einem Betriebszyklus abgestrahlte und am Zielobjekt 11 reflektierte Radarsignale durch benachbarte Empfangsantennen 15 zeitgleich detektiert. Aufgrund des in Azimutrichtung vorliegenden Abstands AD zwischen den Empfangsantennen 15 ergibt sich zumindest ein Phasenunterschied in den empfangenen reflektierten Radarsignalen.

Aus geometrischen Überlegungen ergibt sich beispielsweise für einen gemessenen Phasenunterschied PD bei gegebener Radarwellenlänge l und basierend auf dem Abstand AD der beiden Empfangsantennen 15 der Azimutwinkel AX des Zielobjekts aus folgender Gleichung:

$$AX = \mathrm{invsin}\,(l * PD / (2Pi * AD)),$$

wobei invsin die inverse Sinusfunktion bezeichnet, und Pi die Kreiszahl.

Zu FIG. 1, FIG. 8, FIG. 9 und FIG. 10 sei noch erwähnt, dass diese zumindest insoweit nicht Maßstabsgetreu sind, als das Zielobjekt 11 unter realen Bedingungen deutlich weiter entfernt ist von der Radarsensoreinheit 2 und dem Flugkörper 1 als dargestellt.

Bei der Ermittlung der Zielobjektdaten können die Elektronikeinheit 17, insbesondere die Auswerteeinheit 24, und die Radarsensoreinheit 2 in der weiter oben beschriebenen Art und Weise betrieben werden. Insbesondere kann eine Einstellung der Betriebsparameter der Radarsensoreinheit 2 zumindest teilweise auf Vorwissen zum Zielobjekt 11, beispielsweise zur Position des Zielobjekts 11, erfolgen. Beispielsweise kann eine Einstellung der Betriebsparameter zur Ermittlung des Polarwinkels PX des Zielobjekts 11 und/oder des Azimutwinkels AX des Zielobjekts 11 in einer initialen Phase der Zielerfassung auf Grundlage von Positionsdaten erfolgen, die über eine externe Einheit oder über eine von der Radarsensoreinheit 2 verschiedene Zielerfassungseinheit, die beispielsweise optisch oder Infrarot basiert sein kann, ermittelt und der Elektronikeinheit 17 und Auswerteeinheit 24 zur Verfügung gestellt wurden/-werden. Sobald das Zielobjekt 11 im Sichtfeld der Radarsensoreinheit 2 liegt und erfasst ist, kann eine Anpassung der Betriebsparameter basierend auf den Empfangssignalen der Radarsensoreinheit 2 erfolgen, beispielsweise zur Einstellung eines geeigneten Polarwinkels der Antennenhauptkeule 8 und/oder zur Aktivierung geeigneter Radarsensorgruppen zur Erfassung des Zielobjekts 11 in azimutaler Richtung, dahingehend, dass das Zielobjekt 11 basierend auf der Radarsensoreinheit 2 verfolgt werden kann und im Sichtfeld der Radarsensoreinheit 2 verbleibt.

Gemäß Ausgestaltungen umfasst die Radarsensoreinheit 2 parallel angeordnete, streifenförmige einzelne Radarantennen 7, die entlang der Flugkörperlängsachse L auf der Oberfläche des zylindrischen Gehäuses des Lenkteils 5 des Flugkörpers 1 oder, im allgemeineren Fall entlang der Flugkörperlängsachse L an einer relativ schmalen und langen planaren Oberfläche angeordnet sind. Der zweite Abstand D2 zwischen benachbarten Empfangsantennen 15 und der erste Abstand D1 zwischen den Sendeantennen 14 und den Empfangsantennen können in den weiter oben bereits beschriebenen Bereichen liegen.

Erfindungsgemäß weist die Radarsensoreinheit 2 mindestens eine Sendeantenne 14 sowie zwei Empfangsantennen 15 auf, wobei aber auch jeweils eine größere Anzahl an Sendeantennen 14 und Empfangsantennen 15 vorhanden sein können, z.B. eine Sendeantenne 14 und einer Serie von drei oder mehr benachbarten Empfangsantennen 15 innerhalb einer Radarantennengruppe.

Bei Verwendung von Zirkulatoren und geeigneten Verteilnetzwerken, insbesondere von Sende-Empfangsweichen, können in Ausgestaltungen die Sende und Empfangsantennen 14, 15 identisch sein.

In Ausgestaltungen weisen die streifenförmigen Radarantennen 7 ein über den Polarwinkel richtbares Antennendiagramm auf, dessen 3dB-Antennenhauptkeulenbreite über dem Polarwinkel nur vergleichsweise wenige Grad bemisst, sich aber über dem Azimutwinkel vom mittleren zweistelligen bis zum niederen dreistelligen Gradbereich aufspannt.

Der Polarwinkelbereich über welchen das Antennendiagramm einer streifenförmigen Radarantenne 7 richtbar ist sowie die 3dB-Antennenhauptkeulenbreiten des Antennendiagramms für die verschiedenen Ausrichtungen bestimmen das Raumsegment, welches von der Radarantenne 7 ausgeleuchtet werden kann und in welchem Zielobjekte 11 erfasst werden können.

Im Allgemeinen kann eine Antennenanordnung aus einer Sendeantenne 14 mit zwei oder mehreren benachbarten Empfangsantennen 15 nicht den gesamten Raum eindeutig abdecken. Um größere Raumsegmente erfassen zu können, können weitere gleichartige aber in andere Azimutrichtungen weisende Antennenanordnungen, z.B. Radarantennengruppen, vorgesehen werden. Somit kann mit einer ausreichend großen Antennenanzahl der Raum für im Wesentlichen alle Azimutwinkel abgedeckt werden. Lücken in der Raumabdeckung können ggf. nur durch die Grenzen der Richtbarkeit der Antennendiagramme über dem Polarwinkel bestehen bleiben.

In Ausgestaltungen umfasst die Elektronikeinheit 17 einen oder mehrere Sendekanäle 18 für die Erzeugung von Radarsignalen, welche über angeschlossene Sendeantennen 14 abgestrahlt bzw. gesendet werden, und zwei oder mehrere Empfangskanäle 19 zur Detektion von an einem Zielobjekt 11 reflektierten Radarsignalen, welche dann über die angeschlossenen Empfangsantennen 15 empfangen werden.

In Ausgestaltungen umfasst die Elektronikeinheit 17 mindestens einen Sendekanal 18 und zwei Empfangskanäle 19, die an eine entsprechende Zahl von Sende- und Empfangsantennen 14, 15 angeschlossen sind oder angeschlossen werden können. Für umfangreichere Antennenanordnungen kann ein Sendekanal 18 auf alle Sendeantennen 14 verteilt oder schaltbar sein, oder aber es kann ein Sendekanal 18 je Sendeantenne 14 vorgesehen sein.

In Ausgestaltungen ist für jede Empfangsantenne 15 einer Serie von benachbarten Empfangsantennen 15 ein eigener Empfangskanal 19 vorgesehen, damit insbesondere Phasen- und Amplitudenunterschiede in zeitgleich empfangenen Radarsignalen zur Ermittlung des Azimutwinkels AX des Zielobjekts 11 ausgewertet werden können.

Besteht gemäß Ausgestaltungen die Antennenanordnung aus mehreren gleichartigen Serien oder Gruppen von benachbarten Empfangsantennen 15, die z.B. in unterschiedliche Azimutrichtungen ausgerichtet sind, kann in Ausgestaltungen die Zahl der Empfangskanäle 19 auf die Zahl der Empfangsantennen 15 einer Serie oder Gruppe von benachbarten Empfangsantennen 15 reduziert werden, wobei die Empfangskanäle 19 auf diejenige Serie oder Gruppe von benachbarten Empfangsantennen 15 geschalten werden, mit der gerade Empfangen werden soll.

Wenn es bei entsprechenden Ausgestaltungen erforderlich ist, zwischen wenigen Sende- und Empfangskanälen 18, 19 und vielen Sende- und Empfangsantennen 14, 15 zu schalten, kann es möglich sein, dass nicht parallel über alle Sendeantennen 15 gesendet oder über alle Empfangsantennen 14 empfangen werden kann. Entsprechend kann das Zielobjekt 11 lediglich in dem Raumsegment erfasst werden, das jeweils durch die aktiv geschalteten Sende- und Empfangsantennen 14, 15 abgedeckt wird.

Für eine erfolgreiche Detektion und Lokalisierung von Zielobjekten 11 in einem Raumsegment durch die Radarsensoreinheit 2 ist es erforderlich, die Antennenhauptkeulen 8 der Sende- und Empfangsantennen 14, 15, die dieses Raumsegment abdecken, über den Polarwinkel auf das Zielobjekt 11 auszurichten, beispielsweise mittels eventuell vorhandenem Vorwissen über die ungefähre Position des Zielobjekts 11 oder im Rahmen einer Suchstrategie, nach welcher ein Raumsegment schrittweise nach möglichen Zielobjekten 11 durchsucht oder abgetastet wird.

Befindet sich das Zielobjekt 11 innerhalb der Antennenhauptkeulen 8, kann es in den verschiedenen angeschlossenen Empfangskanälen 19 detektiert werden. Die Vermessung seiner Position in Kugelkoordinaten ist gemäß Ausgestaltungen wie folgt möglich:

(a) Der Polarwinkel kann bereits relativ genau dadurch gewonnen werden, dass sich das Zielobjekt 11 in der über dem Polarwinkel vergleichsweise schmalen Antennenhauptkeule 8 der Sende- und Empfangsantennen 14, 15 befindet. Zur genaueren Vermessung wird die Ausrichtung der Antennenhauptkeule 8 zwischen zeitlich aufeinander folgenden Detektionen, beispielsweise geringfügig oder schrittweise iterativ, variiert. Durch Amplitudenvergleich der verschiedenen Detektionen kann eine vergleichsweise genaue Lokalisierung des Zielobjekts 11 erreicht werden.

(b) Der Azimutwinkel kann über das bloße Wissen, dass sich das Zielobjekt 11 innerhalb der über dem Azimutwinkel vergleichsweise breiten Antennenhauptkeule 8 befindet nur sehr grob abgeschätzt werden. Seine genaue Vermessung und Ermittlung kann durch Phasen- und Amplitudenvergleich von zeitgleichen Detektionen benachbarter Empfangsantennen 15 erfolgen.

(c) Entfernung und Annäherungsgeschwindigkeit des Zielobjekts 11 können beispielsweise bei Wahl einer geeigneten Modulationsform des gesendeten Radarsignals aus dem empfangenen Radarsignal gewonnen werden.

Aus den obigen Ausführungen ergibt sich insbesondere, dass mit der vorgeschlagenen Radarsensoreinheit bei einem Flugkörper eine vergleichsweise präzise Ermittlung von Zielobjektdaten möglich ist. Ferner ist es möglich, die üblicherweise mit Suchoptiken oder anderen Zielerfassungseinheiten bestückte Flugkörperspitze anderweitig zu funktionalisieren.

Bezugszeichen

| | |
|---|---|
| 1 | Lenkflugkörper |
| 2 | Radarsensoreinheit |
| 3 | Antrieb |
| 4 | Flugkörperkopf |
| 5 | Lenkteil |
| 6 | Gefechtskopf |
| 7 | Radarantenne |
| 8 | Antennenhauptkeule |
| 8.1 | erste Antennenhauptkeule |
| 8.2 | zweite Antennenhauptkeule |
| 9 | Polarwinkel |
| 9.1 | erster Polarwinkel |
| 9.2 | zweiter Polarwinkel |

| | |
|---|---|
| 10 | Azimutwinkel |
| 11 | Zielobjekt |
| 12 | Polar-Öffnungswinkel |
| 13 | Azimut-Öffnungswinkel |
| 14 | Sendeantenne |
| 15 | Empfangsantenne |
| 16 | Trägerplatte |
| 17 | Elektronikeinheit |
| 18 | Sendekanal |
| 19 | Empfangskanal |
| 20 | Schaltnetzwerk |
| 21 | weiteres Schaltnetzwerk |
| 22 | Verbindungslinie |
| 23 | Hochfrequenzleitung |
| 24 | Auswerteeinheit |
| AE | antriebsseitiges Ende |
| A1 | erste Amplitude |
| A2 | zweite Amplitude |
| D1 | erster Abstand |
| D2 | zweiter Abstand |
| E | Ebene |
| H | vorderer Halbraum |
| KE | kopfseitiges Ende |
| L | Flugkörperlängsachse |
| I | Radarwellenlänge |
| M | Mittenachse |
| P | Polachse |
| PX | Polarwinkel Zielobjekt |
| PD | Phasenunterschied |
| AX | Azimutwinkel Zielobjekt |
| AD | Abstand zwischen den Empfangsantennen |

**Patentansprüche**

1. Flugkörper (1), insbesondere Lenkflugkörper (1), umfassend einen Flugkörperkorpus und eine Radarsensoreinheit (2) zur Erfassung eines Zielobjekts (11), wobei die Radarsensoreinheit (2) zur Emission von Radarsignalen zumindest einer vorgegebenen Radarwellenlänge (I) eingerichtet ist und zumindest zwei oder mehrere in Längsrichtung streifenförmige Radarantennen (7, 14, 15) umfasst, die an einer Umfangsfläche (16) des Flugkörperkorpus montiert oder integriert sind, derart, dass die Längsrichtung der Radarantennen (7, 14, 15) in Richtung der Flugkörperlängsachse (L) ausgerichtet ist, wobei die Radarantennen (7, 14, 15) eingerichtet sind zum Betrieb als Sendeantenne (14) zum Senden von Radarsignalen und/oder zum Betrieb als Empfangsantenne (15) zum Empfang von reflektierten Radarsignalen und wobei die Radarantennen (7, 14, 15) im Wesentlichen parallel zueinander ausgerichtet angeordnet sind,
**dadurch gekennzeichnet, dass**
die Radarsensoreinheit (2) zumindest eine Radarantennengruppe mit zwei oder mehreren, streifenförmigen Radarantennen (7, 14, 15) umfasst, wobei die zumindest eine Radarantennengruppe

    a) zumindest eine zum Betrieb als Sendeantenne (14) eingerichtete erste Radarantenne (7) und zumindest eine der ersten Radarantenne (7) zugeordnete zweite Radarantenne (7) umfasst, die eingerichtet ist zum Betrieb als Empfangsantenne (15) für den Empfang von Radarsignalen, und
    b) zumindest zwei unmittelbar benachbarte streifenförmige Radarantennen (7) umfasst, die eingerichtet sind zumindest zum Betrieb als Empfangsantennen (15), wobei ein Abstand (D2, AD) der unmittelbar benachbarten, zum Betrieb als Empfangsantennen (15) eingerichteten streifenförmigen Radarantennen (7) quer zu deren Längsrichtung höchstens so groß ist, wie eine oder ein Vielfaches der Radarwellenlänge (I), wobei es sich bei den zumindest zwei unmittelbar benachbarten streifenförmigen Radarantennen (7)
    um die zweite Radarantenne (7) und eine weitere zumindest zum Betrieb als Empfangsantenne (15) eingerichtete Radarantenne (7) handelt.

2. Flugkörper (1) nach Anspruch 1, wobei die streifenförmigen Radarantennen (7, 14, 15) derart montiert oder integriert sind, dass die Längsrichtung einer streifenförmigen Radarantenne (7, 14, 15) und die Flugkörperlängsachse (L) eine Ebene aufspannen.

**3.** Flugkörper (1) nach einem der Ansprüche 1 oder 2, wobei über den Umfang des Flugkörperkorpus verteilt mehrere Radarantennengruppen angeordnet sind, und wobei die mehreren Radarantennengruppen gleichverteilt und/oder gemäß einer vorgegebenen Symmetrie über den Umfang des Flugkörperkorpus verteilt angeordnet sind.

**4.** Flugkörper (1) nach einem der vorhergehenden Ansprüche, wobei zumindest eine der Radarantennen (7) derart eingerichtet und betreibbar ist, dass diese ein über dem Polarwinkel (9) richtbares Antennendiagramm aufweist, wobei der Polarwinkel (9) bezüglich eines Kugelkoordinatensystems definiert ist, dessen Polachse (P) in Richtung der Längsachse der jeweiligen Radarantenne verläuft, und wobei die positive Polachse der Flugkörperspitze (4) zugewandt ist.

**5.** Flugkörper (1) nach Anspruch 4, wobei eine Antennenhauptkeule (8) des Antennendiagramms der zumindest einen Radarantenne (7) über dem Polarwinkel (9) eine Halbwertsbreite von 30 Grad oder weniger als 30 Grad und über dem durch das Kugelkoordinatensystem definierten Azimutwinkel (10) eine Halbwertsbreite von 30 Grad oder mehr als 30 Grad aufweist.

**6.** Flugkörper (1) nach Anspruch 4 oder 5, wobei die zumindest eine Radarantenne (7) als eine über die Frequenz oder die Phase über den Polarwinkel (9) ausrichtbare Radarantenne (7, 14) ausgebildet ist.

**7.** Flugkörper nach einem der Ansprüche 4 bis 6, wobei zumindest eine der Radarantennen (14) als eine Leckwellenantenne eingerichtet ist und/oder wobei mehrere der Radarantennen (7) als phasengesteuerte Gruppenantennen eingerichtet sind.

**8.** Flugkörper (1) nach einem der vorhergehenden Ansprüche, umfassend des Weiteren eine Elektronikeinheit (17) für die Radarsensoreinheit (2), wobei die Elektronikeinheit (17) datentechnisch mit der Radarsensoreinheit (2) zu deren Betrieb verbindbar oder verbunden ist, wobei die Elektronikeinheit (17) eine oder mehrere Elektronikkomponenten (18 - 21, 24) umfasst, die derart eingerichtet sind, dass diese beim Betrieb der Elektronikeinheit (17) die Radarantennen (7) als Sendeantennen (14) und/oder Empfangsantennen (15) betreiben, wobei der Betrieb der Elektronikeinheit (17) und/oder der Radarantennen (7) die Ausführung zumindest eines der folgenden Schritte umfasst:

- Verbinden eines Sendekanals (18) einer Sendeelektronik der Elektronikeinheit (17) mit zumindest einer als Sendeantenne (14) betreibbaren Radarantenne (7), und Verbinden eines Empfangskanals (19) einer Empfangselektronik der Elektronikeinheit (17) mit zumindest einer als Empfangsantenne (15) betreibbaren Radarantenne (7), wobei als Sendeantennen (14) betreibbare Radarantennen (7) und als Empfangsantennen (15) betreibbare Radarantennen (7) derart mit Sende- (18) und Empfangskanälen (19) verbunden und betrieben werden, dass die Radarsensoreinheit (2) mit einer Antennenhauptkeule (8) betreibbar ist, die in Richtung des Zielobjekts ausrichtbar oder gerichtet ist;
- Ansteuern zumindest einer der Radarantennen (7) zur Ausrichtung der Antennenhauptkeule (8) auf ein detektiertes oder zu detektierendes Zielobjekt (11), wobei die Ausrichtung der Antennenhauptkeule (8) für ein zu detektierendes Zielobjekt (11) basierend auf Zielobjektdaten variiert wird;
- Variieren der Ausrichtung der Antennenhauptkeule (8) in aufeinanderfolgenden Detektionszyklen und Ermitteln von Positionsdaten zum Zielobjekt (11), umfassend Polarwinkeldaten (PX) des Zielobjekts (11) bezüglich eines flugkörpereigenen Koordinatensystems, durch Amplitudenvergleich von in aufeinanderfolgenden Detektionszyklen detektierten, reflektierten Radarsignalen;
- zeitgleiche Detektion eines reflektierten Radarsignals eines von einer als Sendeantenne (14) betriebenen Radarantenne (7) ausgesandten Radarsignals mittels benachbarter, als Empfangsantennen (15) betriebener Radarantennen (7) und Ermitteln von Positionsdaten zum Zielobjekt (11), umfassend Azimutwinkeldaten (AX) des Zielobjekts (11) in einem flugkörpereigenen Koordinatensystem, durch Phasen- und/oder Amplitudenvergleich des zeitgleich detektierten Radarsignals;
- Ermitteln von Entfernung und/oder Annäherungsgeschwindigkeit des Zielobjekts (11) basierend auf empfangenen Radarsignalen;

**9.** Flugkörper (1) nach Anspruch 8, wobei die Elektronikeinheit (17) zumindest einen Sendekanal (18) umfasst, und wobei die Elektronikeinheit (17) zumindest zwei Empfangskanäle (19) umfasst, wobei die Elektronikeinheit (17) dazu eingerichtet ist, den zumindest einen Sendekanal (18) mit einer als Sendeantenne (14) betreibbaren Radarantenne (7) zu verbinden, die mit einer in Richtung des Zielobjekts (11) ausrichtbaren Antennenhauptkeule (8) betreibbar ist, und die zumindest zwei Empfangskanäle (19) mit jeweils einer als Empfangsantenne (15) betreibbaren Radarantenne (7) zur Erfassung der am Zielobjekt (11) reflektierten Radarsignale zu verbinden.

**10.** Flugkörper (1) nach einem der vorhergehenden Ansprüche, wobei die Umfangsfläche, an der die Radarantennen (7) montiert oder integriert sind, in Längsrichtung der Radarantennen (7) im Wesentlichen planar ausgebildet ist.

**11.** Flugkörper (1) nach einem der vorhergehenden Ansprüche, wobei die Umfangsfläche bezüglich der Flugkörperlängsachse (L) zylinderförmig oder konisch ausgebildet ist.

## Claims

**1.** Missile (1), in particular guided missile (1), comprising a missile body and a radar sensor unit (2) for acquiring a target object (11), wherein the radar sensor unit (2) is configured to emit radar signals having at least one stipulated radar wavelength (l) and comprises at least two or more radar antennas (7, 14, 15), strip-shaped in the longitudinal direction, that are mounted or integrated on a circumferential surface (16) of the missile body such that the longitudinal direction of the radar antennas (7, 14, 15) is aligned in the direction of the missile longitudinal axis (L), wherein the radar antennas (7, 14, 15) are configured for operation as a transmitting antenna (14) for transmitting radar signals and/or for operation as a receiving antenna (15) for receiving reflected radar signals and wherein the radar antennas (7, 14, 15) are arranged so as to be aligned substantially parallel to one another,
**characterized in that**
the radar sensor unit (2) comprises at least one radar antenna group having two or more strip-shaped radar antennas (7, 14, 15), wherein the at least one radar antenna group comprises

a) at least one first radar antenna (7) configured for operation as a transmitting antenna (14) and at least one second radar antenna (7), assigned to the first radar antenna (7), that is configured for operation as a receiving antenna (15) for receiving radar signals, and
b) at least two directly adjacent strip-shaped radar antennas (7) that are configured at least for operation as receiving antennas (15), wherein a distance (D2, AD) between the directly adjacent strip-shaped radar antennas (7) configured for operation as receiving antennas (15) transversely with respect to the longitudinal direction of said radar antennas is at most as great as a or a multiple of the radar wavelength (l), the at least two directly adjacent strip-shaped radar antennas (7)

being the second radar antenna (7) and a further radar antenna (7) configured at least for operation as a receiving antenna (15).

**2.** Missile (1) according to Claim 1, wherein the strip-shaped radar antennas (7, 14, 15) are mounted or integrated such that the longitudinal direction of one strip-shaped radar antenna (7, 14, 15) and the missile longitudinal axis (L) span a plane.

**3.** Missile (1) according to either of Claims 1 and 2, wherein multiple radar antenna groups are arranged in a manner distributed over the circumference of the missile body, and wherein the multiple radar antenna groups are arranged in an evenly distributed manner and/or in a manner distributed according to a stipulated symmetry over the circumference of the missile body.

**4.** Missile (1) according to one of the preceding claims, wherein at least one of the radar antennas (7) is configured and operable such that it has an antenna radiation pattern that is able to be directed over the polar angle (9), wherein the polar angle (9) is defined with respect to a spherical coordinate system whose polar axis (P) runs in the direction of the longitudinal axis of the respective radar antenna, and wherein the positive polar axis is closest to the missile tip (4).

**5.** Missile (1) according to Claim 4, wherein an antenna main lobe (8) of the antenna radiation pattern of the at least one radar antenna (7) has a half-power beamwidth of 30 degrees or less than 30 degrees over the polar angle (9) and a half-power beamwidth of 30 degrees or more than 30 degrees over the azimuth angle (10) defined by the spherical coordinate system.

**6.** Missile (1) according to Claim 4 or 5, wherein the at least one radar antenna (7) is in the form of a radar antenna (7, 14) that is alignable over the polar angle (9) by means of the frequency or the phase.

**7.** Missile according to one of Claims 4 to 6, wherein at least one of the radar antennas (14) is configured as a leaky wave antenna and/or wherein multiple instances of the radar antennas (7) are configured as phase-controlled group antennas.

**8.** Missile (1) according to one of the preceding claims, additionally comprising an electronics unit (17) for the radar sensor unit (2), wherein the electronics unit (17) is connectable or connected to the radar sensor unit (2) for data transmission purposes in order to operate said radar sensor unit, wherein the electronics unit (17) comprises one or more electronic components (18

- 21, 24) that are configured such that during the operation of the electronics unit (17) they operate the radar antennas (7) as transmitting antennas (14) and/or receiving antennas (15), wherein the operation of the electronics unit (17) and/or of the radar antennas (7) comprises at least one of the following steps being carried out:

- connecting a transmitting channel (18) of transmission electronics of the electronics unit (17) to at least one radar antenna (7) operable as a transmitting antenna (14), and connecting a receiving channel (19) of reception electronics of the electronics unit (17) to at least one radar antenna (7) operable as a receiving antenna (15), wherein radar antennas (7) operable as transmitting antennas (14) and radar antennas (7) operable as receiving antennas (15) are connected to transmitting (18) and receiving (19) channels, and operated, such that the radar sensor unit (2) is operable with an antenna main lobe (8) that is alignable or directed in the direction of the target object;
- actuating at least one of the radar antennas (7) to align the antenna main lobe (8) with a detected or detectable target object (11), wherein the alignment of the antenna main lobe (8) for a detectable target object (11) is varied on the basis of target object data;
- varying the alignment of the antenna main lobe (8) in successive detection cycles and ascertaining position data pertaining to the target object (11), comprising polar angle data (PX) of the target object (11) with reference to an on-missile coordinate system, by means of amplitude comparison of reflected radar signals detected in successive detection cycles;
- simultaneously detecting a reflected radar signal for a radar signal transmitted by a radar antenna (7) operated as a transmitting antenna (14) by means of adjacent radar antennas (7) operated as receiving antennas (15) and ascertaining position data pertaining to the target object (11), comprising azimuth angle data (AX) of the target object (11) in an on-missile coordinate system, by means of phase and/or amplitude comparison of the simultaneously detected radar signal;
- ascertaining the distance and/or approach velocity of the target object (11) on the basis of received radar signals.

**9.** Missile (1) according to Claim 8, wherein the electronics unit (17) comprises at least one transmitting channel (18), and wherein the electronics unit (17) comprises at least two receiving channels (19), wherein the electronics unit (17) is configured to connect the at least one transmitting channel (18) to a radar antenna (7) operable as a transmitting antenna (14) and operable with an antenna main lobe (8) that is alignable in the direction of the target object (11) and to connect the at least two receiving channels (19) to a respective radar antenna (7) operable as a receiving antenna (15) in order to acquire the radar signals reflected by the target object (11).

**10.** Missile (1) according to one of the preceding claims, wherein the circumferential surface on which the radar antennas (7) are mounted or integrated is in substantially planar form in the longitudinal direction of the radar antennas (7).

**11.** Missile (1) according to one of the preceding claims, wherein the circumferential surface is in cylindrical or conical form with respect to the missile longitudinal axis (L).

## Revendications

**1.** Missile (1), notamment missile guidé (1), comprenant un corps de missile et une unité de capteur radar (2) pour détecter un objet cible (11), l'unité de capteur radar (2) étant adaptée pour émettre des signaux radar d'au moins une longueur d'onde radar (l) prédéfinie et comprenant au moins deux ou plus de deux antennes radar (7, 14, 15) en forme de bande dans la direction longitudinale, qui sont montées ou intégrées sur une surface périphérique (16) du corps de missile, de telle sorte que la direction longitudinale des antennes radar (7, 14, 15) est orientée dans la direction de l'axe longitudinal de missile (L), les antennes radar (7, 14, 15) étant adaptées pour fonctionner en tant qu'antennes d'émission (14) pour l'émission de signaux radar et/ou pour fonctionner en tant qu'antennes de réception (15) pour la réception de signaux radar réfléchis, et les antennes radar (7, 14, 15) étant agencées essentiellement parallèlement les unes aux autres,
**caractérisé en ce que**
l'unité de capteur radar (2) comprend au moins un groupe d'antennes radar avec deux ou plus de deux antennes radar en forme de bande (7, 14, 15), l'au moins un groupe d'antennes radar comprenant

a) au moins une première antenne radar (7) adaptée pour fonctionner en tant qu'antenne d'émission (14) et au moins une deuxième antenne radar (7) associée à la première antenne radar (7), qui est adaptée pour fonctionner en tant qu'antenne de réception (15) pour la réception de signaux radar, et
b) au moins deux antennes radar (7) en forme de bande directement voisines, qui sont adaptées au moins pour fonctionner en tant qu'antennes de réception (15), une distance (D2, AD) des antennes radar (7) en forme de bande directement voisines, adaptées pour fonctionner en tant qu'antennes de réception (15), transversalement à leur direction longitudinale, étant au plus aussi grande qu'une longueur d'onde radar (l) ou qu'un multiple de celle-ci, les au moins deux antennes radar (7) en forme de bande directement voisines consistant

en la deuxième antenne radar (7) et une autre antenne radar (7) adaptée au moins pour fonctionner en tant qu'antenne de réception (15).

2. Missile (1) selon la revendication 1, dans lequel les antennes radar en forme de bande (7, 14, 15) sont montées ou intégrées de telle sorte que la direction longitudinale d'une antenne radar en forme de bande (7, 14, 15) et l'axe longitudinal de missile (L) définissent un plan.

3. Missile (1) selon l'une quelconque des revendications 1 ou 2, dans lequel plusieurs groupes d'antennes radar sont agencés en étant répartis sur la périphérie du corps de missile, et dans lequel les plusieurs groupes d'antennes radar sont agencés en étant répartis de manière uniforme et/ou en étant répartis selon une symétrie prédéfinie sur la périphérie du corps de missile.

4. Missile (1) selon l'une quelconque des revendications précédentes, dans lequel au moins l'une des antennes radar (7) est adaptée et peut être exploitée de telle sorte qu'elle présente un diagramme d'antenne orientable sur l'angle polaire (9), l'angle polaire (9) étant défini par rapport à un système de coordonnées sphériques dont l'axe polaire (P) s'étend dans la direction de l'axe longitudinal de l'antenne radar respective, et l'axe polaire positif étant tourné vers la pointe de missile (4).

5. Missile (1) selon la revendication 4, dans lequel un lobe principal d'antenne (8) du diagramme d'antenne de l'au moins une antenne radar (7) présente une largeur de demi-valeur de 30 degrés ou moins de 30 degrés sur l'angle polaire (9) et une largeur de demi-valeur de 30 degrés ou plus de 30 degrés sur l'angle d'azimut (10) défini par le système de coordonnées sphériques.

6. Missile (1) selon la revendication 4 ou 5, dans lequel l'au moins une antenne radar (7) est réalisée sous la forme d'une antenne radar (7, 14) pouvant être orientée sur la fréquence ou la phase sur l'angle polaire (9).

7. Missile selon l'une quelconque des revendications 4 à 6, dans lequel au moins l'une des antennes radar (14) est adaptée comme une antenne à ondes de fuite et/ou dans lequel plusieurs des antennes radar (7) sont adaptées comme des antennes à réseau à commande de phase.

8. Missile (1) selon l'une quelconque des revendications précédentes, comprenant en outre une unité électronique (17) pour l'unité de capteur radar (2), l'unité électronique (17) pouvant être reliée ou étant reliée en termes de données à l'unité de capteur radar (2) pour son fonctionnement, l'unité électronique (17) comprenant un ou plusieurs composants électroniques (18 - 21, 24) qui sont adaptés de telle sorte que ceux-ci, lors du fonctionnement de l'unité électronique (17), exploitent les antennes radar (7) comme antennes d'émission (14) et/ou antennes de réception (15), le fonctionnement de l'unité électronique (17) et/ou des antennes radar (7) comprenant l'exécution d'au moins l'une des étapes suivantes :

- la liaison d'un canal d'émission (18) d'une électronique d'émission de l'unité électronique (17) à au moins une antenne radar (7) pouvant être exploitée comme antenne d'émission (14), et la liaison d'un canal de réception (19) d'une électronique de réception de l'unité électronique (17) à au moins une antenne radar (7) pouvant être exploitée comme antenne de réception (15), des antennes radar (7) pouvant fonctionner comme antennes d'émission (14) et des antennes radar (7) pouvant fonctionner comme antennes de réception (15) étant reliées à des canaux d'émission (18) et de réception (19) et exploitées de telle sorte que l'unité de capteur radar (2) peut être exploitée avec un lobe principal d'antenne (8) qui peut être orienté ou est orienté en direction de l'objet cible ;
- la commande d'au moins l'une des antennes radar (7) pour orienter le lobe principal d'antenne (8) vers un objet cible (11) détecté ou à détecter, l'orientation du lobe principal d'antenne (8) pour un objet cible (11) à détecter étant modifiée sur la base de données d'objet cible ;
- la variation de l'orientation du lobe principal d'antenne (8) dans des cycles de détection successifs et la détermination de données de position par rapport à l'objet cible (11), comprenant des données d'angle polaire (PX) de l'objet cible (11) par rapport à un système de coordonnées propre au missile, par comparaison d'amplitudes de signaux radar réfléchis détectés dans des cycles de détection successifs ;
- la détection simultanée d'un signal radar réfléchi d'un signal radar émis par une antenne radar (7) fonctionnant comme antenne d'émission (14) au moyen d'antennes radar (7) voisines fonctionnant comme antennes de réception (15) et la détermination de données de position par rapport à l'objet cible (11), comprenant des données d'angle d'azimut (AX) de l'objet cible (11) dans un système de coordonnées propre au missile, par comparaison de phase et/ou d'amplitude du signal radar détecté simultanément ;
- la détermination de la distance et/ou de la vitesse d'approche de l'objet cible (11) sur la base de signaux radar reçus ;

**9.** Missile (1) selon la revendication 8, dans lequel l'unité électronique (17) comprend au moins un canal d'émission (18), et dans lequel l'unité électronique (17) comprend au moins deux canaux de réception (19), l'unité électronique (17) étant adaptée pour relier l'au moins un canal d'émission (18) à une antenne radar (7) pouvant être exploitée comme antenne d'émission (14), qui peut fonctionner avec un lobe principal d'antenne (8) pouvant être orienté en direction de l'objet cible (11), et pour relier les au moins deux canaux de réception (19) chacun à une antenne radar (7) pouvant fonctionner comme antenne de réception (15) pour détecter les signaux radar réfléchis par l'objet cible (11).

**10.** Missile (1) selon l'une quelconque des revendications précédentes, dans lequel la surface périphérique sur laquelle les antennes radar (7) sont montées ou intégrées est essentiellement plane dans la direction longitudinale des antennes radar (7).

**11.** Missile (1) selon l'une quelconque des revendications précédentes, dans lequel la surface périphérique est réalisée sous forme cylindrique ou conique par rapport à l'axe longitudinal de missile (L).

FIG 1
L
AE
3
1
6
2
5
7
4
KE
10
E
M
P
11
8
9

FIG 2

H
8
12
M
9
7
7
P
4
5
2

FIG 3
8
13
16
7
23
17
1

FIG 4
D1
L
15
14
D2
5

FIG 5

D1
14
D2
15
15
16

FIG 6

8
7
9.1
P

FIG 7

8
7
9.2
P

FIG 8

11
15
15
14
14
15
15
15
15
5
14
15
15
14

FIG 9
14
20
23
20
19
15
23
21
18
21
23
15
17
24

FIG 10

2
14
8.2
A1
A2
22
11
PX
15
8.1

11

AX
AX
15
15
AD

FIG 11

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 69515790 T2
- DE 3145374 A1
- WO 02088770 A2
- EP 3221921 A1
- EP 2673656 A2
- US 2008258065 A1


### In der Beschreibung aufgeführte Nicht-Patentliteratur


- **S.A. HOVANESSIAN**. *Radar Detection & Tracking Systems*, 1982, ISBN 0-89006-018-5
- **DAVID K. BARTON**. *Radar System Analysis*, 1985, ISBN 0-89006-043-6